(19) 

**Europäisches Patentamt**
**European Patent Office**
**Office européen des brevets**

(11) **EP 2 341 709 A1**

(12) **EUROPEAN PATENT APPLICATION**
published in accordance with Art. 153(4) EPC

(43) Date of publication:
06.07.2011 Bulletin 2011/27

(51) Int Cl.:
*H04N 7/173* (2011.01)  *G06F 13/00* (2006.01)
*H04H 20/24* (2008.01)  *H04L 1/16* (2006.01)
*H04W 4/08* (2009.01)

(21) Application number: 09816067.4

(22) Date of filing: 14.09.2009

(86) International application number:
PCT/JP2009/066023

(87) International publication number:
WO 2010/035652 (01.04.2010 Gazette 2010/13)

(84) Designated Contracting States:
AT BE BG CH CY CZ DE DK EE ES FI FR GB GR
HR HU IE IS IT LI LT LU LV MC MK MT NL NO PL
PT RO SE SI SK SM TR
Designated Extension States:
AL BA RS

(30) Priority: 26.09.2008 JP 2008248831

(71) Applicant: NTT DOCOMO, INC.
Chiyoda-ku
Tokyo 100-6150 (JP)

(72) Inventors:
• UENO Hidetoshi
Tokyo 100-6150 (JP)
• KITAHARA Ryo
Tokyo 100-6150 (JP)

(74) Representative: Viering, Jentschura & Partner
Grillparzerstrasse 14
81675 München (DE)

(54) **DATA RECEIVING TERMINAL, DATA DISTRIBUTION SERVER, DATA DISTRIBUTION SYSTEM, AND DATA DISTRIBUTION METHOD**

(57) A data receiving terminal (20) has a broadcast wave receiving function and a communication wave sending/receiving function. A communication control unit (210) receives data from a data distribution server (10) by using the broadcast wave receiving function. When having determined that there is a defect portion, a determination unit (220) determines whether or not to repair the defect portion according to at least one of a communication status between the data receiving terminal (20) and the data distribution server (10) and a data relevant status related to the data. When the determination unit (220) determines that the defect portion should be repaired, the communication control unit (210) requests the data distribution server (10) to resend the defect portion by using the communication wave sending/receiving function and receives the defect portion sent from the data distribution server (10) according to the request for resending by using the communication wave sending/receiving function.

*Fig.4*

## Description

## Technical Field

The present invention relates to a data receiving terminal, a data distribution server, a data distribution system, and a data distribution method.

## Background Art

There have recently been a number of services which enable cellular phones and mobile terminals such as PHS to download and utilize various kinds of digital data (hereinafter referred to as data) such as images, audios, videos, and texts. Their examples include those making the mobile terminals download and utilize data such as ringtone melodies and wallpapers and those making the mobile terminals download and utilize video data such as movies and audio data such as music. The foregoing services use mobile telecommunication networks such as the universal mobile telecommunication system (UMTS), so as to allow data receiving terminals to download and utilize various kinds of data from data distribution servers. For downloading various kinds of data, unicast-type communications which distribute data as requested by receiving terminals are typically used.

In the unicast-type communications, the required amount of communications increases relative to the number of data receiving terminals and the volume of data, since the communications occur in response to demands from the data receiving terminals to start downloading. Therefore, when the number of data receiving terminals or the volume of data increases, communications exceeding the capacity of networks may occur, thereby causing a problem of failing to distribute data and so forth as the case may be.

On the other hand, so-called One Seg (see Non Patent Literature 1), which has been in service in Japan since 2006, is a service for distributing data such as texts and still images as well as videos and audios to mobile terminals such as cellular phones. The One Seg utilizes a system of terrestrial digital television broadcasting known as ISDB-T and uses broadcasting networks for distributing the data. The data distribution using the broadcasting networks employs a broadcast-type distribution method which distributes the data to a large, indefinite number of data receiving terminals at once.

The broadcast-type distribution method is characterized in that the amount of communications is constant independently of the number of data receiving terminals, since electric waves which distribute data are received by a plurality of terminals at the same time. Because of the foregoing, the broadcast-type distribution method is a system effective in distributing a large volume of data to a great number of data receiving terminals.

In the broadcast-type distribution method, on the other hand, there are many cases where no uplink paths exist from the data receiving terminals to data distribution servers, so that no delivery confirmation of whether distributed data has reached the data receiving terminals or not can be made. Therefore, it is problematic in that whether data has reached the data receiving terminals or not cannot always be ensured. By contrast, the unicast-type data distribution is a data communication technique effective in reliably sending data to a data receiving terminal, since it typically performs a delivery confirmation by using an uplink while receiving data. In view of the foregoing, unicast- and broadcast-type data distribution systems can take advantage of their characteristics when used distinctively according to their purposes.

There has been MBMS (Multimedia Broadcast Multicast Service, see Non Patent Literature 2) which is a system achieving broadcast distribution, or its extended multicast distribution for distributing data to a large, indefinite number of data receiving terminals, on mobile telecommunication networks. The MBMS distributes data by using the mobile telecommunication networks and thus can utilize uplink communications at the same time. Therefore, the MBMS is provided with a reception reporting procedure, by which whether distributed data is received by a data receiving terminal or not can be confirmed. When the data receiving terminal could not receive all the data by the broadcast distribution, defect data can be compensated for by unicast communications according to a file repair procedure. Utilizing the file repair procedure is advantageous in enhancing the reliability of data distribution, since defect files, which have been problematic in distributing data by broadcast waves alone, can be compensated for by unicast.

Meanwhile, attention has been given to multimedia broadcasting services for mobile terminals (hereinafter referred to as multimedia broadcasting) as a data distribution service for next-generation mobile terminals subsequent to the One Seg. As of July 2008, the multimedia broadcasting is under discussion in the Panel on Multimedia Broadcasting Services for Mobile Terminals in the Ministry of Internal Affairs and Communications in Japan (see Non Patent Literature 3). The multimedia broadcasting is a service to be established by using frequencies which will be newly available after the terrestrial television broadcasting shifts to digital in 2011. The multimedia broadcasting is planned to provide various kinds of data such as videos and audios in any combinations. As of July 2008, systems for achieving the multimedia broadcasting is also under discussion in the Ministry of Internal Affairs and Communications, for which MediaFLO (see Non Patent Literature 4) and ISDB-Tmm, which is an extension of the One Seg, have been proposed.

The multimedia broadcasting assumes its subject data receiving terminals to be cellular phones and the like and thus is characterized in that it can use both the broadcast waves newly available by frequency allocations and the conventionally usable mobile telecommunication networks. Therefore, for example, distribution data can be distributed to data receiving terminals by broadcast waves, while using mobile telecommunication networks in order to compensate for the data dropped out from files, whereby a function on a par with the file repair procedure of MBMS can be provided.

For the multimedia data such as audios and videos, there are two kinds of distribution, i.e., real-time distribution in which users watch and hear data while downloading it and download distribution in which data is once stored in a terminal and then starts to play after waiting for a request from the users. However, the download-type distribution also includes such a form as progressive download which starts playing data while downloading it. The above-mentioned file repair procedure of MBMS is a data distribution type utilized for the download distribution.

The multimedia broadcasting can use two kinds of distribution systems, i.e., those of real-time and download types, distinctively from each other. For example, the real-time-type distribution can be used for distributing highly real-time data such as World Cup soccer live broadcast, while the download-type distribution can be used for distributing lowly real-time data such as movies and comedy shows.

## Citation List

### Non Patent Literature

Non Patent Literature 1: ARIB TR-B 14 Operational Guidelines for Digital Terrestrial Television Broadcasting
Non Patent Literature 2: 3GPP, TS26 346 Multimedia Broadcast Multicast Service (MBMS); Protocols and codecs
Non Patent Literature 3: A Report from Panel on Multimedia Broadcasting Services for Mobile Terminals, the Ministry of Internal Affairs and Communications
Non Patent Literature 4: Murali R. Chari, Fuyun Ling, Ashok Mantravadi, Raghuraman Krishnamoorthi, Rajiv Vijayan, G. Kent Walker, and Rob Chandhok, "FLO Physical Layer: An Overview" IEEE TRANSACTIONS ON BROADCASTING, VOL. 53, NO. 1, MARCH 2007

## Summary of Invention

### Technical Problem

When one data receiving terminal can use broadcast and unicast distributions distinctively from each other as in the multimedia broadcasting and MBMS, how to switch between the broadcast and unicast distributions to perform downloading must be considered deliberately from the viewpoint of avoiding unnecessary communication costs.

In view of the foregoing, it is an object of the present invention to provide a data receiving terminal, a data distribution server, a data distribution system, and a data distribution method which can prevent unnecessary communication costs from occurring when repairing defect portions in broadcast-wave data communications with communication waves.

### Solution to Problem

The inventors conducted diligent studies so as to achieve the above-mentioned object and, as a result, have found that an effective method must be found out by deliberately considering the following problems in order to prevent unnecessary communication costs from occurring when repairing defect portions in broadcast-wave data communications (broadcast distribution) with communication waves (unicast distribution).

First, there is a problem of distribution hours. In mobile telecommunication networks, for example, there is an upper limit for available resources in the telecommunication networks, which inhibits a large volume of data from being unicast to a great number of users. In particular, it is important that unicast traffic, which exerts a heavy impact on networks, be as little as possible in hours with a high traffic volume (e.g., early evening to night). The foregoing makes it necessary for the file repair procedure by unicast to be contrived, for example, such as to avoid the high traffic hours and be carried out in low traffic hours (e.g., late in the night).

The second is a problem of the type of networks for use. Recent mobile terminals include those which can utilize not only the networks such as the universal mobile telecommunication system mentioned above, but also lower communication cost networks such as wireless LAN (W-LAN) and WiMAX and communication networks (base stations) whose users are limited to a fixed number such as Femto BTS. When such a low communication cost network is available, the unicast file repair procedure is relatively less influential on the network traffic. The foregoing makes it necessary for the file repair procedure to be contrived such as to utilize a low communication cost network as much as possible, for example.

The third is a problem of selecting data to be subjected to file repair. The download-type file distribution assumed in the multimedia broadcasting is supposed to use a download method which stores all the data in a data receiving terminal beforehand regardless of whether its user utilizes the data or not. Since the data has already been stored in the data receiving terminal when the user wants to utilize the same, it is advantageous in that no wait time for communications is necessary. However, defect data must be repaired before storing all the data in the receiving terminal. The unicast is typically used therefor, since it is suitable for reliably repairing the defect data. Since the file repair procedure is performed regardless of whether the data is actually utilized by the user or not, there are cases where communications carried out by the file repair procedure end up in vain. Therefore, it must work out how to determine which data to be subjected to the file repair procedure and which part of the whole data to be repaired.

For solving the above-mentioned three problems, when compensating for the data dropped out after performing the broadcast distribution by the unicast system, the present invention provides a method which compensates for defect data only in the cases satisfying the following conditions so as to prevent to generate unnecessary communication costs by unicast.

1) In a low traffic hour.
2) Being connected to a relatively low cost network.
3) There is a high probability of the data (the whole or a part thereof) being utilized in view of a past utilization history.

That is, the data receiving terminal of the present invention is a data receiving terminal having a broadcast wave receiving function and a communication wave sending/receiving function, the data receiving terminal comprising broadcast wave receiving means for receiving data from a data distribution server by using the broadcast wave receiving function; repair determination means for determining whether or not there is a defect portion in the data and, when it is determined that there is the defect portion, determining whether or not to repair the defect portion according to at least one of a communication status between the data receiving terminal and the data distribution server and a data relevant status related to the data; communication wave sending/receiving means for requesting, when the repair determination means determines that the defect portion should be repaired, the data distribution server to resend the defect portion by using the communication wave sending/receiving function and receiving the defect portion sent from the data distribution server according to the request for resending by using the communication wave sending/receiving function; and storage means for storing the defect portion received by the communication wave sending/receiving means.

The data distribution server of the present invention is a data distribution server having a broadcast wave sending function and a communication wave sending/receiving function, the data distribution server comprising data transmission means for sending data to a data receiving terminal by using the broadcast wave sending function; resending request receiving means to be requested from the data receiving terminal to resend a defect portion of the data by using the communication wave sending/receiving function; and defect portion transmission means for sending the defect portion to the data receiving terminal according to the request for resending by using the communication wave sending/receiving function.

The data distribution system of the present invention is a data distribution system including a data receiving terminal having a broadcast wave receiving function and a communication wave sending/receiving function and a data distribution server having a broadcast wave sending function and a communication wave sending/receiving function; the data receiving terminal comprising broadcast wave receiving means for receiving data from the data distribution server by using the broadcast wave receiving function; repair determination means for determining whether or not there is a defect portion in the data and, when it is determined that there is the defect portion, determining whether or not to repair the defect portion according to at least one of a communication status between the data receiving terminal and the data distribution server and a data relevant status related to the data; communication wave sending/receiving means for requesting, when the repair determination means determines that the defect portion should be repaired, the data distribution server to resend the defect portion by using the communication wave sending/receiving function and receiving the defect portion sent from the data distribution server according to the request for resending by using the communication wave sending/receiving function; and storage means for storing the defect portion received by the communication wave sending/receiving means; the data distribution server comprising data transmission means for sending data to the data receiving terminal by using the broadcast wave sending function; resending request receiving means to be requested from the data receiving terminal to resend the defect portion of the data by using the communication wave sending/receiving function; and defect portion transmission means for sending the defect portion to the data receiving terminal according to the request for resending by using the communication wave sending/receiving function.

The data distribution method of the present invention is a data distribution method in a data distribution system including a data receiving terminal having a broadcast wave receiving function and a communication wave sending/receiving function and a data distribution server having a broadcast wave sending function and a communication wave sending/receiving function, the method comprising a data sending step for data transmission means in the data distribution server to send data to the data receiving terminal by using the broadcast wave sending function; a broadcast wave receiving step for broadcast wave receiving means in the data receiving terminal to receive the data from the data distribution server by using the broadcast wave receiving function; a repair determination step for repair determination means in the data receiving terminal to determine whether or not there is a defect portion in the data and, when it is determined that there is the defect portion, determine whether or not to repair the defect portion according to at least one of a communication status between the data receiving terminal and the data distribution server and a data relevant status related to the data; a first communication wave sending/receiving step for communication wave sending/receiving means in the data receiving terminal to request, when the repair determination means determines that the defect portion should be repaired, the data distribution server to resend the defect portion by using the communication wave sending/receiving function; a resending request receiving step for resending request receiving means in the data distribution server to be requested from the data receiving terminal to resend the defect portion of the data by using the communication wave sending/receiving function; a defect portion sending step for defect portion transmission means in the data distribution server to send the defect portion to the data receiving terminal according to the request for resending by using the communication wave sending/receiving function; a second communication wave sending/receiving step for the communication wave sending/receiving means in the data receiving terminal to receive the defect portion sent from the data distribution server according to the request for resending by using the communication wave sending/receiving function; and a storage step for storage means in the data receiving terminal to store the defect portion received by the communication wave sending/receiving means.

In the foregoing data receiving terminal, data distribution server, data distribution system, and data distribution method of the present invention, when having determined that there is a defect portion in distributed data, the data receiving terminal determines whether or not to repair the defect portion according to at least one of a communication status between the data receiving terminal and the data distribution server and a data relevant status related to the distributed data. Since whether or not to execute a defect portion repairing process is appropriately determined according to the communication status and data relevant status, unnecessary communication costs can be prevented from occurring when repairing the defect portion in the broadcast-wave data communications with communication waves.

Preferably, in the data receiving terminal of the present invention, the communication status is a relationship between the current time and a preset time period, while the repair determination means compares the current time with the time period and determines that the defect portion should be repaired when the current time falls within the time period.

Preferably, in the data distribution method of the present invention, the communication status is a relationship between the current time and a preset time period, while the repair determination means compares the current time with the time period and determines that the defect portion should be repaired when the current time falls within the time period.

This aspect of the present invention provides a solution to the first problem of distribution hour. This aspect of the present invention makes it possible to perform conditional determination between a time period when the file repair procedure can be executed and a time period when it should not, whereby the file repair procedure can be prevented from being executed in time periods in which network traffic is concentrated.

Preferably, in the data receiving terminal of the present invention, the communication status is a relationship between the type of a network currently available between the data receiving terminal and the data distribution server and the type of a preset network, while the repair determination means compares the type of the currently available network with the type of the preset network and determines that the defect portion should be repaired when the same type exists.

Preferably, in the data distribution method of the present invention, the communication status is a relationship between the type of a network currently available between the data receiving terminal and the data distribution server and the type of a preset network, while the repair determination means compares the type of the currently available network with the type of the preset network and determines that the defect portion should be repaired when the same type exists.

This aspect of the present invention provides a solution to the second problem of the type of networks for use. This aspect of the present invention makes it possible to perform conditional determination between a network in which the file repair procedure can be executed and a network in which it should not, whereby the file repair procedure can be executed while utilizing a lower communication cost network.

Preferably, in the data receiving terminal of the present invention, the communication status is a relationship between the kind of a currently available base station in the currently available network and the kind of a base station preset in relation to the currently available network, while the repair determination means compares the kind of the currently available base station with the kind of the preset base station and determines that the defect portion should be repaired when the same kind exists.

Preferably, in the data distribution method of the present invention, the communication status is a relationship between the kind of a currently available base station in the currently available network and the kind of a base station preset in relation to the currently available network, while the repair determination means compares the kind of the currently available base station with the kind of the preset base station and determines that the defect portion should be repaired when the same kind exists.

This aspect of the present invention provides a solution to the second problem of the type of networks for use. This aspect of the present invention makes it possible to perform conditional determination between a network and base station in which the file repair procedure can be executed and a network and base station in which it should not, whereby the file repair procedure can be executed while utilizing a lower communication cost network and base station.

Preferably, in the data receiving terminal of the present invention, the communication status is a relationship between the remaining battery level of the data receiving terminal and a preset threshold of the remaining battery level, while the repair determination means compares the remaining battery level of the data receiving terminal with the threshold and determines that the defect portion should be repaired when the remaining battery level of the data receiving terminal is at the threshold or higher.

Preferably, in the data distribution method of the present invention, the communication status is a relationship between the remaining battery level of the data receiving terminal and a preset threshold of the remaining battery level, while the repair determination means compares the remaining battery level of the data receiving terminal with the threshold and determines that the defect portion should be repaired when the remaining battery level of the data receiving terminal is at the threshold or higher.

By taking account of the remaining battery level of a data receiving terminal 20 as a condition, this aspect of the present invention can prevent the battery from running out by downloading when the remaining battery level is low, for example.

Preferably, in the data receiving terminal of the present invention, the communication status is a relationship between the type of a currently concluded usage contract of a network between the data receiving terminal and the data distribution server and the type of a preset usage contract of a network, while the repair determination means compares the type of the currently concluded usage contract of the network with the type of the preset usage contract of the network and determines that the defect portion should be repaired when the same type exists.

Preferably, in the data distribution method of the present invention, the communication status is a relationship between the type of a currently concluded usage contract of a network between the data receiving terminal and the data distribution server and the type of a preset usage contract of a network, while the repair determination means compares the type of the currently concluded usage contract of the network with the type of the preset usage contract of the network and determines that the defect portion should be repaired when the same type exists.

By taking account of the network usage contract between the data receiving terminal 20 and a data distribution server 10 as a condition, this aspect of the present invention can prevent unexpectedly high communication fees from occurring.

Preferably, in the data receiving terminal of the present invention, the communication status is a relationship between the radio field strength between the data receiving terminal and the data distribution server and a preset threshold of the radio field strength, while the repair determination means compares the radio field strength between the data receiving terminal and the data distribution server with the threshold and determines that the defect portion should be repaired when the radio field strength between the data receiving terminal and the data distribution server is at the threshold or higher.

Preferably, in the data distribution method of the present invention, the communication status is a relationship between the radio field strength between the data receiving terminal and the data distribution server and a preset threshold of the radio field strength, while the repair determination means compares the radio field strength between the data receiving terminal and the data distribution server with the threshold and determines that the defect portion should be repaired when the radio field strength between the data receiving terminal and the data distribution server is at the threshold or higher.

By taking account of the radio field strength between the data receiving terminal 20 and the data distribution server 10 as a condition, this aspect of the present invention can automatically execute download when the terminal enters a service area such as the ground from a no-service area such as the underground, for example.

Preferably, in the data receiving terminal of the present invention, the data relevant status is a relationship between a past receiving data utilization ratio calculated on the basis of a usage history of past receiving data previously received from the data distribution server and a threshold Z of utilization ratio calculated on the basis of the communication status, while the repair determination means compares the past receiving data utilization ratio with the threshold Z of utilization ratio and determines that the defect portion should be repaired before a user of the data receiving terminal utilizes the data when the past receiving data utilization ratio is at the threshold Z or higher.

Preferably, in the data distribution method of the present invention, the data relevant status is a relationship between a past receiving data utilization ratio calculated on the basis of a usage history of past receiving data previously received from the data distribution server and a threshold Z of utilization ratio calculated on the basis of the communication status, while the repair determination means compares the past receiving data utilization ratio with the threshold Z of utilization ratio and determines that the defect portion should be repaired before a user of the data receiving terminal utilizes the data when the past receiving data utilization ratio is at the threshold Z or higher.

This aspect of the present invention provides a solution to the third problem of selecting data to be subjected to file repair. By using the past receiving data utilization ratio as a parameter representing the probability of the distributed data being utilized in practice, this aspect of the present invention makes it possible to perform conditional determination between data for which the file repair procedure can be executed and data for which it should not, whereby the file repair procedure can be performed for only the data at a predetermined utilization ratio threshold Z or higher.

Preferably, in the data receiving terminal of the present invention, the communication status is a relationship between the current time and a preset time period, while the threshold Z of utilization ratio is calculated by

$$Z = C1/C2 \qquad (1)$$

where C1 is the communication cost occurring when a communication is performed by the communication wave sending/receiving function within the preset time period, and C2 is the communication cost occurring when a communication is performed by the communication wave sending/receiving function on the outside of the preset time period.

Preferably, in the data distribution method of the present invention, the communication status is a relationship between the current time and a preset time period, while the threshold Z of utilization ratio is calculated by

$$Z = C1/C2 \qquad (1)$$

where C1 is the communication cost occurring when a communication is performed by the communication wave sending/receiving function within the preset time period, and C2 is the communication cost occurring when a communication is performed by the communication wave sending/receiving function on the outside of the preset time period.

As a solution to the third problem of selecting data to be subjected to file repair, it would be favorable that the threshold Z of utilization ratio is calculated according to the above-mentioned expression (1) when the communication status is the relationship between the current time and the preset time period in particular.

Preferably, in the data receiving terminal of the present invention, the threshold Z of utilization ratio is calculated by

$$Z = (C1/C2) \times W \qquad (2)$$

where W is the weight corresponding to a genre of data sent from the data distribution server.

Preferably, in the data distribution method of the present invention, the threshold Z of utilization ratio is calculated by

$$Z = (C1/C2) \times W \qquad (2)$$

where W is the weight corresponding to a genre of data sent from the data distribution server.

As a solution to the third problem of selecting data to be subjected to file repair, it would be favorable that the threshold Z of utilization ratio is calculated according to the above-mentioned expression (2). This allows the threshold Z of utilization ratio to be calculated in conformity to the characteristic feature of the distributed data, thereby enabling calculation with a higher accuracy.

Preferably, in the data receiving terminal of the present invention, the communication status is a relationship between the type of a currently concluded usage contract of a network between the data receiving terminal and the data distribution server and the type of a preset usage contract of a network, while the threshold Z of utilization ratio is calculated by

$$Z = C3/C4 \qquad (3)$$

where C3 is the communication cost occurring when a communication is performed by the communication wave sending/receiving function on the basis of the preset usage contract of the network, and C4 is the communication cost occurring when a communication is performed by the communication wave sending/receiving function on the basis of a usage contract other than the preset usage contract of the network.

Preferably, in the data distribution method of the present invention, the communication status is a relationship between the type of a currently concluded usage contract of a network between the data receiving terminal and the data distribution server and the type of a preset usage contract of a network, while the threshold Z of utilization ratio is calculated by

$$Z = C3/C4 \qquad (3)$$

where C3 is the communication cost occurring when a communication is performed by the communication wave sending/receiving function on the basis of the preset usage contract of the network, and C4 is the communication cost occurring when a communication is performed by the communication wave sending/receiving function on the basis of a usage contract other than the preset usage contract of the network.

As a solution to the third problem of selecting data to be subjected to file repair, it would be favorable that the threshold Z of utilization ratio is calculated according to the above-mentioned expression (3) when the communication status is the relationship between the type of a currently concluded usage contract of a network between the data receiving terminal and the data distribution server and the type of a preset usage contract of a network in particular.

Preferably, in the data receiving terminal of the present invention, the broadcast wave receiving means receives pre-acquisition data, as a predetermined part of data to be received from the data distribution server, from the data distribution server by using the broadcast wave receiving function, the data relevant status is whether or not there is an unreceived portion in the pre-acquisition data, and the repair determination means determines that the unreceived portion should be repaired before a user of the data receiving terminal utilizes the data when it is determined that there is the unreceived portion in the pre-acquisition data.

Preferably, in the data distribution method of the present invention, the broadcast wave receiving means receives pre-acquisition data, as a predetermined part of data to be received from the data distribution server, from the data distribution server by using the broadcast wave receiving function, the data relevant status is whether or not there is an unreceived portion in the pre-acquisition data, and the repair determination means determines that the unreceived portion should be repaired before a user of the data receiving terminal utilizes the data when it is determined that there is the unreceived portion in the pre-acquisition data.

This aspect of the present invention provides another solution to the third problem of selecting data to be subjected to file repair. This aspect of the present invention makes it possible to distinguish data to be subjected to the file repair procedure beforehand (pre-acquisition data) from those not, and download only the pre-acquisition data beforehand.

Preferably, in the data receiving terminal of the present invention, the pre-acquisition data is a leading portion of the data to be received from the data distribution server.

Preferably, in the data distribution method of the present invention, the pre-acquisition data is a leading portion of the data to be received from the data distribution server.

The leading portion of the distributed data (utilization start data) has a high probability of being referred to by the user in order to see what content the distributed data has and thus is appropriate as data to be subjected to the file repair procedure beforehand.

Preferably, in the data receiving terminal of the present invention, the size of the pre-acquisition data is calculated by

$$x = D - TV \qquad (4)$$

where x is the size of the pre-acquisition data, D is the total size of data to be received from the data distribution server, T is the playing time of the data, and V is the average bit rate of the network in the communication wave sending/receiving function.

Preferably, in the data distribution method of the present invention, the size of the pre-acquisition data is calculated by

$$x = D - TV \qquad (4)$$

where x is the size of the pre-acquisition data, D is the total size of data to be received from the data distribution server, T is the playing time of the data, and V is the average bit rate of the network in the communication wave sending/receiving function.

As another solution to the third problem of selecting data to be subjected to file repair, it would be favorable that the size of the pre-acquisition data is calculated according to the above-mentioned expression (4). This makes it possible to compensate for the whole defect portion before the distribution data is completely played.

Preferably, in the data receiving terminal of the present invention, the size of the pre-acquisition data is calculated according to a past receiving data partial utilization ratio computed on the basis of a utilization history in each portion of past receiving data previously received from the data distribution server, and the total size of portions each having the past receiving data partial utilization ratio at a predetermined threshold or higher is computed as the size of the pre-acquisition data.

Preferably, in the data distribution method of the present invention, the size of the pre-acquisition data is calculated according to a past receiving data partial utilization ratio computed on the basis of a utilization history in each portion of past receiving data previously received from the data distribution server, and the total size of portions each having the past receiving data partial utilization ratio at a predetermined threshold or higher is computed as the size of the pre-acquisition data.

As another solution to the third problem of selecting data to be subjected to file repair, it would be favorable that the total size of portions each having the past receiving data partial utilization ratio at a predetermined threshold or higher is computed as the size of the pre-acquisition data. This makes it possible to download a portion having a high data utilization ratio as the pre-acquisition data beforehand.

Preferably, in the data receiving terminal of the present invention, the broadcast wave receiving means receives metadata describing at least one of the communication status and the data relevant status from the data distribution server by using the broadcast wave receiving function.

Preferably, in the data distribution method of the present invention, the broadcast wave receiving means receives metadata describing at least one of the communication status and the data relevant status from the data distribution server by using the broadcast wave receiving function.

The metadata may be produced and managed on the data distribution server side and sent to the data receiving terminal.

Preferably, in the data receiving terminal of the present invention, the storage means stores metadata describing at least one of the communication status and the data relevant status.

Preferably, in the data distribution method of the present invention, the storage means stores metadata describing at least one of the communication status and the data relevant status.

The metadata may be produced, managed, and used by the data receiving terminal itself.

Preferably, the data distribution server of the present invention further comprises resending determination means for determining whether or not to resend the defect portion according to at least one of a communication status between the data receiving terminal and the data distribution server and a data relevant status related to the data in response to the request for resending, while the defect portion transmission means sends the defect portion to the data receiving terminal by using the communication wave sending/receiving function when the resending determination means determines that the defect portion should be resent.

In this aspect of the present invention, in response to the request from the data receiving terminal to resend a defect portion of the distributed data, the data distribution server determines whether or not to repair the defect portion according to at least one of the communication status between the data receiving terminal and the data distribution server and the data relevant status related to distribution data. Since whether or not to execute the defect portion repairing process is determined appropriately according to the communication status and data relevant status, unnecessary communication costs can be prevented from occurring when repairing the defect portion in the broadcast-wave data communications with communication waves.

Preferably, in the data distribution server of the present invention, the data relevant status is a relationship between a past receiving data utilization ratio calculated on the basis of a usage history of past receiving data previously received by the data receiving terminal from the data distribution server and a threshold Z of utilization ratio calculated on the basis of the communication status, while the resending determination means compares the past receiving data utilization ratio with the threshold Z of utilization ratio and determines that the defect portion should be resent to the data receiving terminal before a user of the data receiving terminal utilizes the data when the past receiving data utilization ratio is at the threshold Z or higher.

This aspect of the present invention provides a solution to the third problem of selecting data to be subjected to file repair. By using the past receiving data utilization ratio as a parameter representing the probability of the distributed data being utilized in practice, this aspect of the present invention makes it possible to perform conditional determination between data for which the file repair procedure can be executed and data for which it should not, whereby the file repair procedure can be performed for only the data at a predetermined utilization ratio threshold Z or higher.

Preferably, in the data distribution server of the present invention, the communication status is a relationship between the current time and a preset time period, while the threshold Z of utilization ratio is calculated by

$$Z = C1/C2 \qquad (1)$$

where C1 is the communication cost occurring when a communication is performed by the communication wave sending/receiving function within the preset time period, and C2 is the communication cost occurring when a communication is performed by the communication wave sending/receiving function on the outside of the preset time period.

As a solution to the third problem of selecting data to be subjected to file repair, it would be favorable that the threshold Z of utilization ratio is calculated according to the above-mentioned expression (1) when the communication status is the relationship between the current time and the preset time period in particular.

Preferably, in the data distribution server of the present invention, the communication status is a relationship between the type of a currently concluded usage contract of a network between the data receiving terminal and the data distribution server and the type of a preset usage contract of a network, while the threshold Z of utilization ratio is calculated by

$$Z = C3/C4 \qquad (3)$$

where C3 is the communication cost occurring when a communication is performed by the communication wave sending/receiving function on the basis of the preset usage contract of the network, and C4 is the communication cost occurring when a communication is performed by the communication wave sending/receiving function on the basis of a usage contract other than the preset usage contract of the network.

As a solution to the third problem of selecting data to be subjected to file repair, it would be favorable that the threshold Z of utilization ratio is calculated according to the above-mentioned expression (3) when the communication status is the relationship between the type of a currently concluded usage contract of a network between the data receiving terminal and the data distribution server and the type of a preset usage contract of a network in particular.

Preferably, in the data distribution server of the present invention, the data transmission means sends metadata describing at least one of the communication status and the data relevant status to the data receiving terminal by using the broadcast wave sending function.

The metadata may be produced and managed on the data distribution server side and sent to the data receiving terminal.

Advantageous Effects of Invention

The present invention can provide a data receiving terminal, a data distribution server, a data distribution system, and data distribution method which can prevent unnecessary communication costs from occurring when repairing defect portions in broadcast-wave data communications with communication waves.

**Brief Description of Drawings**

[Fig. 1] is a structural diagram of a data distribution system 1;
[Fig. 2] is a hardware diagram of a data distribution server 10 and a data receiving terminal 20;
[Fig. 3] is a structural block diagram illustrating a functional structure of the data distribution server 10;
[Fig. 4] is a structural block diagram illustrating a functional structure of the data receiving terminal 20;
[Fig. 5] is a sequence chart for explaining a procedure of typical data download performed on the basis of the structure of the data distribution system 1;
[Fig. 6] is a flowchart illustrating a processing flow in a time-shift download scheme;
[Fig. 7] is a chart illustrating examples of parameter names and their values recorded in metadata used in an embodiment;
[Fig. 8] is a flowchart illustrating a processing flow in a network-adapted data download scheme;
[Fig. 9] is a diagram illustrating the contents of distribution data stored in a data storage unit 240 after acquiring the distribution data;
[Fig. 10] is a flowchart illustrating a processing flow in a partial data download scheme;
[Fig. 11] is a sequence chart for explaining a procedure of the partial data download scheme based on the overall structure of the data distribution system 1;
[Fig. 12] is a chart illustrating an example in which the utilization probability varies among portions of distribution data; and
[Fig. 13] is a chart illustrating an example in which the utilization probability varies among portions of distribution data.

**Reference Signs List**

1... data distribution system; 10...data distribution server; 110...storage unit; 120...data transmission unit; 130...resending request receiving unit; 140...resending determination unit; 150... defect portion transmission unit; 20... data receiving terminal; 210...communication control unit; 220...determination unit; 230...I/O control unit; 240...data storage unit; 30...communication network

**Description of Embodiments**

In the following, preferred embodiments of the data receiving terminal, data distribution server, data distribution system, and data distribution method in accordance with the present invention will be explained in detail with reference to the accompanying drawings. In the explanation of the drawings, the same constituents will be referred to with the same signs, while omitting their overlapping descriptions.

**Overall structure of a data distribution system 1**

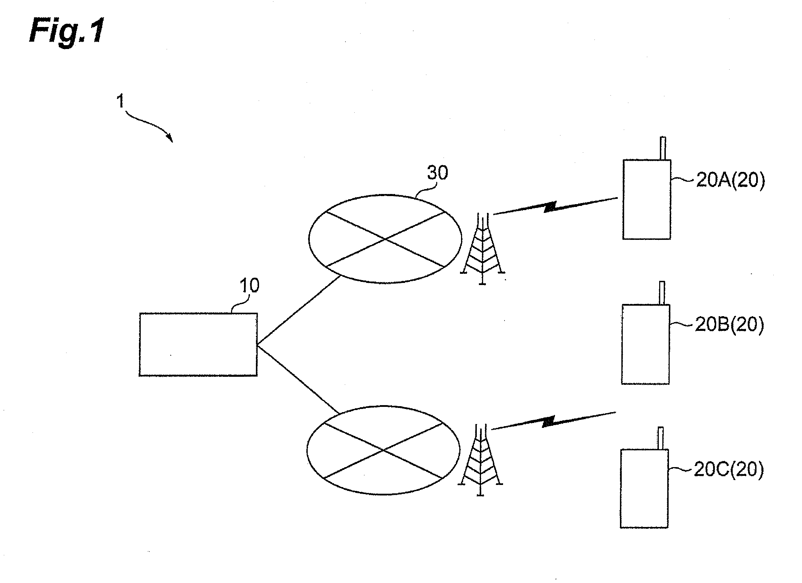

First, the structure of the data distribution system 1 in accordance with an embodiment of the present invention will be explained with reference to Fig. 1. Fig. 1 is a structural diagram of the data distribution system 1. As illustrated in Fig. 1, the data distribution system 1 is constituted by a data distribution server 10 and a data receiving terminal 20, which are connected to each other by a communication network 30.

The data distribution server 10 holds various kinds of data utilizable by a user having the data receiving terminal 20 and functions to distribute distribution data (corresponding to "data" in the claims), metadata, and the like to the data receiving terminal 20 by using a broadcast wave sending function and a communication wave sending/receiving function.

The data receiving terminal 20 is a terminal which receives the distribution data, metadata, and the like distributed by the data distribution server 10 by using a broadcast wave receiving function and a communication wave sending/receiving function. An example of the data receiving terminal 20 is a cellular phone. By utilizing the distribution data downloaded in the data receiving terminal 20, the user can use various services. Fig. 1 illustrates data receiving terminals 20A, 20B, 20C as the data receiving terminal 20, while the data receiving terminals 20A, 20B, 20C are collectively referred to as the data receiving terminal 20.

The network 30 is a broadcast network or communication network such as a mobile telecommunication network, wireless LAN, WiWAX, and multimedia broadcasting for distributing various kinds of data including the distribution data. When the network 30 is multimedia broadcasting, for example, the distribution data is sent and received between the network 30 and the data receiving terminal 20 by a broadcast network. When the network 30 is constituted by the UMTS, the distribution data is sent and received between the network 30 and the data receiving terminal 20 by a mobile telecommunication network.

**Structure of the data distribution server 10**

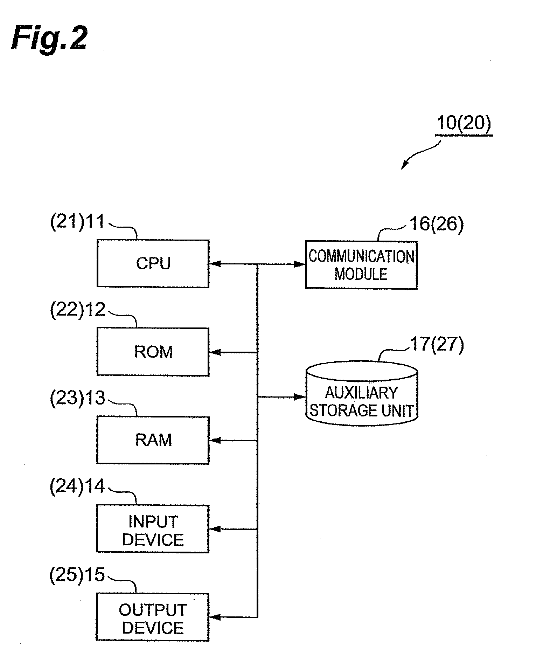

The data distribution server 10 will now be explained in more detail. Fig. 2 is a hardware diagram of the data distribution server 10. As illustrated in Fig. 2, the data distribution server 10 is physically constructed as a typical computer system including a CPU 11, main storage units such as a ROM 12 and a RAM 13, an input device 14 such as a keyboard and a mouse, an output device 15 such as a display, a communication module 16 such as a network card for sending/receiving data to/from the data receiving terminal 20, an auxiliary storage unit 17 such as a hard disk, and the like. Functions of the data distribution server 10, which will be explained later, are achieved by causing hardware such as the CPU 11, ROM 12, and RAM 13 to read predetermined computer software thereon, so as to operate the input device 14, output device 15, and communication module 16 and read and write data in the main storage units 12, 13 and auxiliary storage unit 17 under the control of the CPU 11.

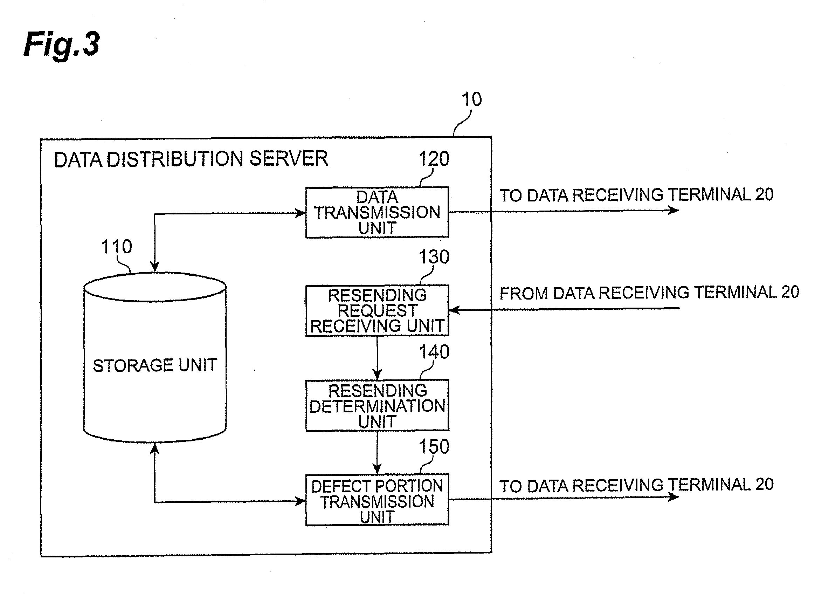

Fig. 3 is a structural block diagram illustrating a functional structure of the data distribution server 10. As illustrated in Fig. 3, the data distribution server 10 functionally comprises a storage unit 110, a data transmission unit 120 (data transmission means), a resending request receiving unit 130 (resending request receiving means), a resending determination unit 140 (resending determination means), and a defect portion transmission unit 150 (defect portion sending means).

The storage unit 110 stores distribution data to be distributed to the data receiving terminal 20. The storage unit 110 also holds metadata describing at least one of a communication status between the data distribution server 10 and the data receiving terminal 20 and a data relevant status which is any kind of statuses related to the distribution data. The metadata describes at least one of the communication status and data relevant status, thereby recording the size, kind, content, distribution time, location, and the like of the distribution data. For further details of the metadata, refer to http://www.arib.or.jp/tyosakenkyu/kikaku_hoso/hoso_ std-b038.html [retrieved on 2008-09-25] and http://www.3gpp.org/ftp/Specs/html-info/26346.htm [retrieved on 2008-09-25]. Details of the communication status and data relevant status will be explained later.

The data transmission unit 120 sends the distribution data to the data receiving terminal 20 by using the broadcast wave sending function. The data transmission unit 120 also sends the metadata to the data receiving terminal 20 by using the broadcast wave receiving function. The data transmission unit 120 acquires the distribution data and metadata from the storage unit 110 and sends them.

The resending request receiving unit 130 is requested the data receiving terminal 20 to resend a defect portion of the distribution data by using the communication wave sending/receiving function.

The resending request determination unit 140 determines whether or not to resend the defect portion of the distribution data according to at least one of the communication status between the data distribution server 10 and the data receiving terminal 20 and the data relevant status related to the distribution data in response to the request for resending from the data receiving terminal 20. The resending determination unit 140 outputs the result of determination to the defect portion transmission unit 150.

When the resending determination unit 140 determines that the defect portion of the distribution data should be resent, the defect portion transmission unit 150 sends the defect portion to the data receiving terminal 20 by using the communication wave sending/receiving function. The defect portion transmission unit 150 acquires the defect portion of the distribution data from the storage unit 110 and sends it.

**Structure of the data receiving terminal 20**

The data receiving terminal 20 will now be explained in more detail. Fig. 2 is a hardware diagram of the data receiving terminal 20. As illustrated in Fig. 2, the data receiving terminal 20 physically comprises a CPU 21, a ROM 22 and a RAM 23 which are main storage units, an input device 24 such as operation buttons, an output device 25 such as an LCD or an organic EL display, a communication module 26 for sending/receiving data to/from the data distribution server 10, and an auxiliary storage unit 27 such as a memory device. Functions of the data receiving terminal 20, which will be explained later, are achieved by causing hardware such as the CPU 21, ROM 22, and RAM 23 to read predetermined computer software thereon, so as to operate the input device 24, output device 25, and communication module 26 and read and write data in the main storage units 22, 23 and auxiliary storage unit 27 under the control of the CPU 21.

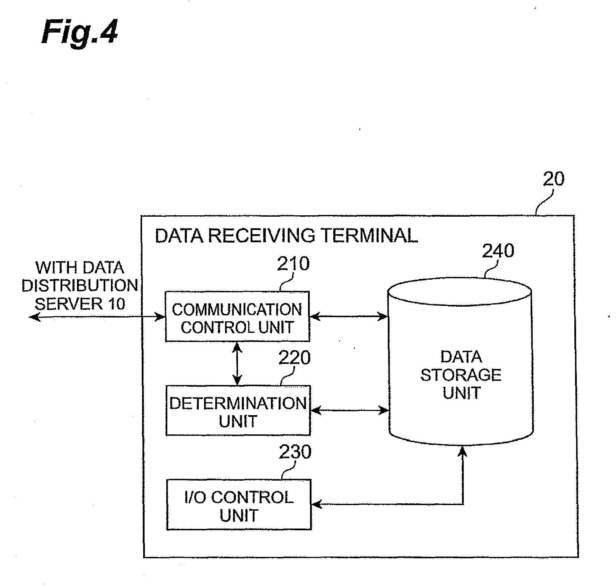

Fig. 4 is a structural block diagram illustrating a functional structure of the data receiving terminal 20. As illustrated in Fig. 4, the data receiving terminal 20 functionally comprises a communication control unit 210 (broadcast wave receiving means and communication wave sending/receiving means), a determination unit 220 (repair determination means), an I/O control unit 230, and a data storage unit 240 (storage mans).

The communication control unit 210, which is a part for controlling communications of the data receiving terminal 20, sends/receives data to/from the data distribution server 10 through the network 30. The communication control unit 210 can use both the multimedia broadcasting and the mobile telecommunication network. That is, the communication control unit 210 can receive the distribution data and metadata from the data distribution server 10 by using the broadcast wave receiving function. When the determination unit 220, which will be explained later, determines that a defect portion of the distribution data should be repaired, the communication control unit 210 can request the data distribution server 10 to resend the defect portion, and receive the defect portion sent from the data distribution server 10 according to the request for resending by using the communication wave sending/receiving function.

The determination unit 220 determines whether or not there is a defect portion in the distribution data from the data distribution server 10 and, when it is determined that there is the defect portion, determines whether or not to repair the defect portion according to at least one of a communication status between the data distribution server 10 and the data receiving terminal 20 and a data relevant status related to the distribution data. Detailed operations of the determination unit 220 will be explained later.

The I/O control unit 230, which is an I/O part for displaying a screen for the user and receiving orders from the user, corresponds to the input device 24 and output device 25 in Fig. 3, for example. The I/O control unit 230 acquires the distribution data and its defect portion from the data storage unit 240 and displays them on screen to the user.

The data storage unit 240 is a part for storing the distribution data downloaded from the data distribution server 10 and the defect portion of the distribution data. When the data stored in the data storage unit 240 is displayed to the user by the I/O control unit 230, the user can utilize the distribution data from the data distribution server 10 and its defect portion. The data storage unit 240 can store not only the distribution data but also metadata and other relevant information items. The metadata may be produced and managed by the data distribution server 10 side and sent to the data receiving terminal 20, or produced, managed, and used by the data receiving terminal 20 itself. The data storage unit 240 may be constituted by the RAM 23 and auxiliary storage unit 27 in Fig. 3, for example.

## Operations of the data distribution system 1

Operations performed by the data distribution system 1 will now be explained.

## Typical data download procedure

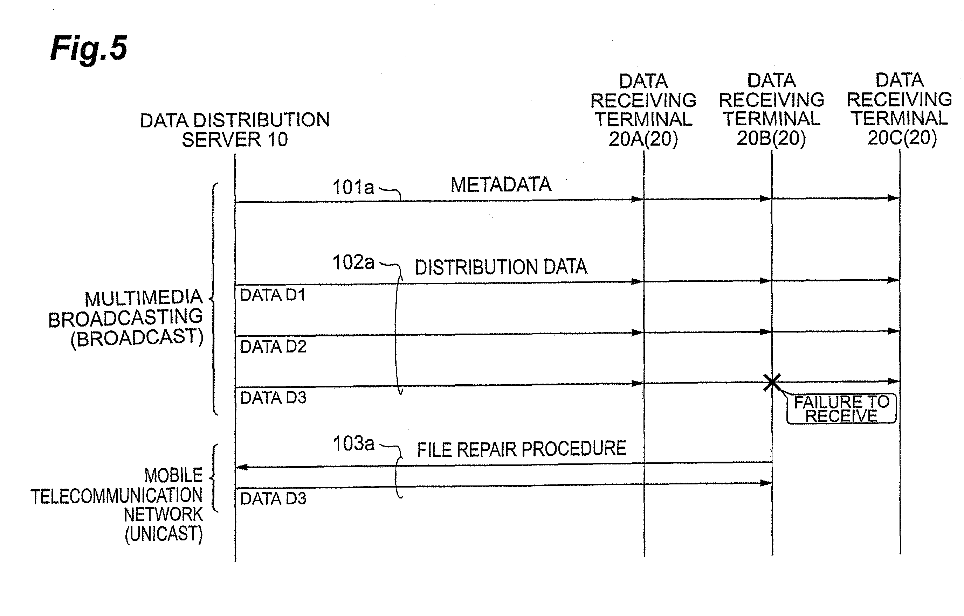

Before explaining the operations of the data distribution system 1 in accordance with the present invention, a typical data download procedure will be explained with reference to Fig. 5. Fig. 5 is a sequence chart for explaining a procedure of typical data download performed on the basis of the structure of the data distribution system 1 illustrated in Figs. 1 to 4.

First, before receiving the distribution data, metadata corresponding the distribution data to be downloaded is acquired when necessary (step 101a). Fig. 5 illustrates a state where the metadata is broadcast by the multimedia broadcasting, while the data receiving terminals 20A, 20B, 20C receive the metadata at the same time. This example using Fig. 5 is based on the premise that distribution time information indicating a timing at which the distribution data is broadcast is recorded within the metadata. The metadata may be acquired individually from the data distribution server 10 by unicast instead of utilizing the broadcast exemplified above. This step may be skipped when there is no metadata.

Next, according to the distribution time information included in the metadata, the data receiving terminal 20 receives the distribution data distributed by the multimedia broadcasting at the above-mentioned timing (step 102a). Fig. 5 illustrates an example in which three data distribution operations are performed in order to accomplish the data distribution, whereby that the data utilizable by the user is completed only when all of the three data distribution operations are finished so that all of the data D1, D2, D3 are distributed.

The example of Fig. 5 also illustrates a case where the data receiving terminal 20B fails to receive the third data transmission and thus does not download the data D3. Examples of reasons for failing to receive data seem to include the power discontinuity and decrease in quality of received electric waves in the data receiving terminal 20B.

Thereafter, the data receiving terminal 20B having failed to receive data compensates for the defect portion, i.e., data D3, by a file repair procedure (step 103a). The example of Fig. 5 illustrates that the unreceived data D3 is requested to be compensated for by unicast using HTTP (Hypertext Transfer Protocol), for instance, on the mobile telecommunication network and received as being resent in response to the request. Thus compensating for data by unicast enables the data receiving terminal 20 to reliably compensate for the lost data D3. The file repair procedure includes various modes such as a method automatically executed by the data receiving terminal 20 and a method executed after waiting for an order from the user.

The procedure explained in the foregoing completes downloading all the distribution data and enables the user owning the data receiving terminal 20 to utilize the distribution data. However, the foregoing procedure takes no account of the above-mentioned three problem, i.e., the first problem of distribution hour, the second problem of the type of networks for use, and the third problem of selecting data to be subjected to file repair, whereby the three problems still remain. Hence, methods for solving the above-mentioned problems will be explained in the following.

## Time-shift download scheme

To begin with, a solution to the first problem of distribution hour will be explained. This solution to the first problem will hereinafter be referred to as time-shift download scheme.

The data download method illustrated in Fig. 5 performs the file repair procedure by a unicast communication and thus may congest the communication traffic depending on the time period. The problem of congesting the traffic becomes greater in particular when the file repair procedure illustrated in Fig. 5 is executed in a time period with a high traffic volume (e.g., early evening to night), for example. Therefore, the time-shift download scheme provides such a mechanism as to execute the file repair procedure only in time periods with a low network communication volume.

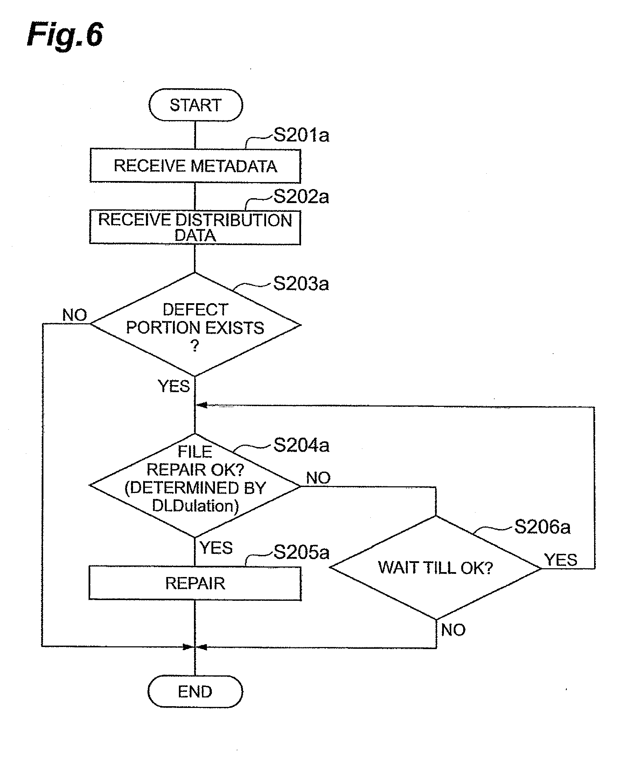

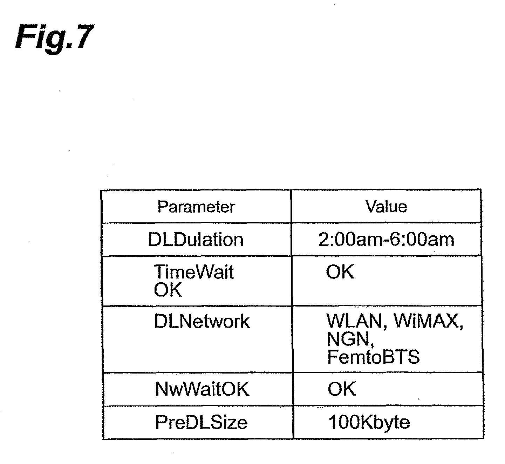

Fig. 6 is a flowchart illustrating a processing flow in the time-shift download scheme. Fig. 7 illustrates examples of parameter names and their values recorded in metadata used in this embodiment.

First, by using the multimedia broadcasting, the communication control unit 210 of the data receiving terminal 20 acquires the metadata (step 201a) and the distribution data (step 202a). The processing of steps 201a and 202a is the same as that of steps 101a and 102a illustrated in Fig. 5.

Thereafter, when having determined that there is a defect portion (step 203a), the determination unit 220 of the data receiving terminal 20 determines whether or not to repair the defect portion according to a communication status between the data receiving terminal 20 and the data distribution server 10 (step 204a). Here, the communication status is the relationship between the current time and a preset time period. Specifically, the determination unit 220 compares the time period represented by DLDulation described in the metadata illustrated in Fig. 7 with the current time. Here, DLDulation describes a time period during which the file repair can be executed, while the data distribution server 10 distributes the metadata including this information to the data receiving terminal 20. When having determined that the current time falls within the time period represented by DLDulation, i.e., it is a time at which the file repair can be executed (step 204a: Yes), the determination unit 220 determines that the defect portion should be repaired and executes the file repair procedure (step 205a).

When having determined that the current time is one not to execute the file repair (step 204a: No), the determination unit 220 ends the processing without executing the file repair procedure (step 206a: No) or waits till a time at which the file repair procedure can be executed (step 206a: Yes). When waiting till the time at which the file repair procedure can be executed, the processing returns to step 204a. Whether or not to wait till a time at which the file repair procedure can be executed is described in the metadata. Specifically, it corresponds to TimeWaitOK illustrated in Fig. 7, and the time at which the file repair procedure can be executed is waited for when it is OK.

The foregoing procedure enables the data receiving terminal 20 to perform conditional determination between a time period when the file repair procedure can be executed and a time period when it should not, whereby the file repair procedure can be prevented from being executed in time periods in which network traffic is concentrated.

Though the foregoing explains a procedure in which DLDulation and TimeWaitOK are described in the metadata and reported from the data distribution server 10 to the data receiving terminal 20, the metadata describing DLDulation and TimeWaitOK may be stored beforehand in the data receiving terminal 20. In this case, whether or not to execute the file repair procedure is determined according to DLDulation and TimeWaitOK described in the metadata stored beforehand in the data storage unit 240 of the data receiving terminal 20.

**Network-adapted download scheme**

A solution to the second problem of the type of networks for use will now be explained. This solution to the second problem will hereinafter be referred to as network-adapted download scheme.

The data download method illustrated in Fig. 5 performs the file repair procedure by a unicast communication and thus may incur a higher communication cost depending on the network employed. Therefore, the network-adapted download scheme provides such a mechanism as to execute the file repair procedure by choosing a network with a low communication cost. Here, the communication cost means a communication fee or a value related to a network such as network volume, transmission rate, and delay time. Assuming that the communication fee is taken as the communication cost, for example, there is a case where the data communication fee increases when the mobile communication network is used, while the communication fee becomes low when the wireless LAN is used instead. In view of the foregoing, there is a case where it will be preferred if the file repair procedure is executed by using a communication scheme incurring the lowest possible communication cost when the data receiving terminal 20 can select a plurality of communication schemes.

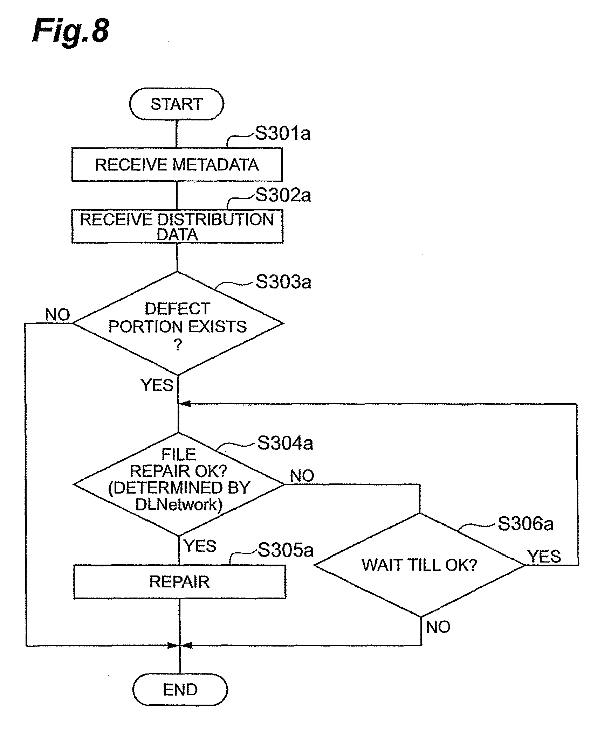

Fig. 8 is a flowchart illustrating a processing flow in the network-adapted data download scheme. Fig. 7 illustrates examples of parameter names and their values recorded in metadata used in this embodiment.

First, by using the multimedia broadcasting, the communication control unit 210 of the data receiving terminal 20 acquires the metadata (step 301a) and the distribution data (step 302a). The processing of steps 301a and 302a is the same as that of steps 101a and 102a illustrated in Fig. 5.

Thereafter, when having determined that there is a defect portion (step 303a), the determination unit 220 of the data receiving terminal 20 determines whether or not to repair the defect portion according to a communication status between the data receiving terminal 20 and the data distribution server 10 (step 304a). Here, the communication status is the relationship between the type of a network currently available between the data receiving terminal 20 and the data distribution server 10 and the type of a preset network. The communication status may also be the relationship between the kind of a currently available base station in the currently available network and the kind of a base station preset in relation to the currently available network. The following will explain a case where the communication status includes both the type of the network and the kind of the base station by way of example.

Specifically, the determination unit 220 compares types of networks represented by DLNetwork described in the metadata illustrated in Fig. 7 with the type of the currently available network. The determination unit 220 also compares kinds of base stations represented by DLNetwork described in the metadata illustrated in Fig. 7 with the kind of the currently available base station. Here, DLNetwork describes the types of networks and kinds of base stations in which the file repair can be executed, while the data distribution server 10 distributes the metadata including this information to the data receiving terminal 20. The types of networks and kinds of base stations may be arranged in descending order of priority. The priority is determined by whether the communication cost is higher or lower, for example.

When the types of networks represented by DLNetwork include one coinciding with the type of the currently available network while the kinds of base stations represented by DLNetwork include one coinciding with the kind of the currently available base station, i.e., when it is determined that a network and a base station in which the file repair can be executed are currently available (step 304a: Yes), the determination unit 220 determines that the defect portion should be repaired and executes the file repair procedure (step 305a).

When having determined that one of the currently available network and base station in which the file repair can be executed does not exist (step 304a: No), the determination unit 220 ends the processing without executing the file repair procedure (step 306a: No) or waits till the network and base station in which the file repair procedure can be executed are available (step 306a: Yes). When waiting till the network and base station in which the file repair procedure can be executed are available, the processing returns to step 304a. Whether or not to wait till a time at which the file repair procedure can be executed is described in the metadata. Specifically, it corresponds to NWWaitOK illustrated in Fig. 7, and the time at which the file repair procedure can be executed is waited for when it is OK.

The foregoing procedure enables the data receiving terminal 20 to perform conditional determination between the network and base station in which the file repair procedure can be executed and the network and base station in which it should not, whereby the file repair procedure can be executed by using a network incurring a lower communication cost.

Though the foregoing explains a procedure in which DLNetwork and NwWaitOK are described in the metadata and reported from the data distribution server 10 to the data receiving terminal 20, the metadata describing DLNetwork and NwWaitOK may be stored beforehand in the data receiving terminal 20. In this case, whether or not to execute the file repair procedure is determined according to DLNetwork and NwWaitOK described in the metadata stored beforehand in the data storage unit 240 of the data receiving terminal 20.

**Other examples of the communication status**

The above-mentioned time-shift download scheme employs the relationship between the current time and a preset time period as the communication status, while the determination unit 220 of the data receiving terminal 20 determines whether or not to repair the defect portion according to the communication status. The above-mentioned network-adapted download scheme employs not only the relationship between the type of a network currently available between the data receiving terminal 20 and the data distribution server 10 and the type of a preset network but also the relationship between the kind of a base station currently available in the currently available network and the kind of a base station preset in relation to the currently available network as the communication status, while the determination unit 220 of the data receiving terminal 20 determines whether or not to repair the defect portion according to the communication status. The following will explain other examples of the communication status.

**Other examples of the communication status: #1**

The communication status may be a relationship between the remaining battery level of the data receiving terminal 20 and a preset threshold of the remaining battery level. In this case, the determination unit 220 of the data receiving terminal 20 compares the remaining battery level of the data receiving terminal 20 with the threshold and determines that the defect portion should be repaired when the remaining battery level of the data receiving terminal is at the threshold or higher.

Thus taking account of the remaining battery level of the data receiving terminal 20 as a condition can prevent the battery from running out by downloading when the remaining battery level is low, for example. It may be determined that the defect portion should be repaired not only when the remaining battery level of the data receiving terminal 20 is at the threshold or higher, i.e., sufficient, but also during charging.

**Other examples of the communication status: #2**

The communication status may be a relationship between the type of a currently concluded usage contract of a network between the data receiving terminal 20 and the data distribution server 10 and the type of a preset usage contract of a network. In this case, the determination unit 220 of the data receiving terminal 20 compares the type of the currently concluded usage contract of the network with the type of the preset usage contract of the network and determines that the defect portion should be repaired when the same type exists.

Thus taking account of the type of the network usage contract between the data receiving terminal 20 and the data distribution server 10 as a condition can prevent unexpectedly high communication fees from occurring. For example, there is a case where the same mobile telecommunication network includes users subscribing to a flat-rate plan and those not. In such a case, automatic data downloading for the users not subscribing to the flat-rate plan may charge them unexpected fees. For preventing this, data download may automatically be performed for only the users subscribing to the flat-rate plan, for example.

## Other examples of the communication status: #3

The communication status may be a relationship between the radio field strength between the data receiving terminal 20 and the data distribution server 10 and a preset threshold of the radio field strength. In this case, the determination unit 220 of the data receiving terminal 20 compares the radio field strength between the data receiving terminal 20 and the data distribution server 10 with the threshold and determines that the defect portion should be repaired when the radio field strength between the data receiving terminal 20 and the data distribution server 10 is at the threshold or higher.

Thus taking account of the radio field strength between the data receiving terminal 20 and the data distribution server 10 as a condition can automatically execute download when the terminal enters a service area such as the ground from a no-service area such as the underground, for example. A specific example may automatically cause the terminal to download the defect portion of distribution data upon returning to a service area when getting off an underground train.

In the foregoing explanations concerning the other examples of the communication status, each threshold may be described in the metadata and reported from the data distribution server 10 to the data receiving terminal 20. Alternatively, the metadata including the description concerning each threshold may be stored beforehand in the data receiving terminal 20. In this case, whether or not to execute the file repair procedure is determined on the basis of each threshold described in the metadata stored beforehand in the data storage unit 240 of the data receiving terminal 20.

## Data-utilization-status-adapted download scheme

A solution to the third problem of selecting data to be subjected to file repair will now be explained. This solution to the third problem will hereinafter be referred to as data-utilization-status-adapted download scheme. The data-utilization-status-adapted download scheme is a mechanism in which a data utilization status is taken into consideration when determining whether or not to execute the file repair procedure.

The determination unit 220 of the data receiving terminal 20 determines whether or not to execute the file repair procedure according to a data relevant status related to the distribution data. Here, the data relevant status represents a utilization status of the distribution data and is a relationship between a past receiving data utilization ratio p calculated on the basis of a usage history of past receiving data and a threshold Z of utilization ratio calculated on the basis of the communication status..The past receiving data is distribution data previously received by the data receiving terminal 20 from the data distribution server 10. Specifically, the determination unit 220 of the data receiving terminal 20 compares the past receiving data utilization ratio p with the threshold Z of utilization ratio and determines on the basis of the time-shift download scheme or network-adapted download scheme that the defect portion should be repaired before a user of the data receiving terminal 20 utilizes the distribution data when the past receiving data utilization ratio is at the threshold Z or higher.

The foregoing makes it possible to perform conditional determination between data for which the file repair procedure can be executed and data for which it should not, whereby the file repair procedure can be performed for only the data at a predetermined utilization ratio threshold Z or higher.

The utilization ratio threshold Z can be calculated according to the following expression (1):

$$Z = C1/C2 \qquad (1)$$

where, when the communication status is a relationship between the current time and a preset time period, i.e., when DLDulation is taken as a criterion for determination on the basis of the time-shift download scheme, C1 is the communication cost occurring when a communication is performed by the communication wave sending/receiving function within the preset time period (e.g., in a night hour with a lower traffic volume), and C2 is the communication cost occurring when a communication is performed by the communication wave sending/receiving function on the outside of the preset time period (e.g., in a daytime hour with a higher traffic volume).

The above-mentioned expression (1) is derived from the following background. For example, the total communication cost A for repairing the whole defect portion within the preset time period beforehand can be represented by

$$A = D \times C1 \qquad (5)$$

where D is the data size of the defect portion. On the other hand, when a request from a user occurs on the outside of the preset time period, and the defect portion is repaired thereafter, the total communication cost B can be represented by

$$B = D \times C2 \times p. \qquad (6)$$

Since the case with the communication cost B repairs the defect portion only when the data is actually utilized, it includes the past receiving data utilization ratio p as a parameter representing the probability of the data being actually utilized.

When the cost A of the expression (5) is smaller upon comparison between the expressions (5) and (6), the total cost can be kept lower if the defect portion is repaired before the user utilizes the distribution data. Therefore, downloading the defect portion in advance can be effective when p satisfies

$$D \times C1 \leq D \times C2 \times p. \qquad (7)$$

From the expression (7),

$$p \geq C1/C2. \qquad (8)$$

It will be preferred if the defect portion is downloaded in advance when p satisfies this condition.

In view of the foregoing, the utilization ratio threshold Z is calculated according to

$$Z = C1/C2. \qquad (1)$$

The determination unit 220 of the data receiving terminal 20 compares the past receiving data utilization ratio p with the utilization ratio threshold Z and determines on the basis of the time-shift download scheme that the defect portion should be repaired before the user of the data receiving terminal 20 utilizes the distribution data when the past receiving data utilization ratio p is at the threshold Z or higher, i.e., when the past receiving data utilization ratio p satisfies the expression (8).

In terms of specific values, assuming that the communication cost C1 is 1/10 of the communication cost C2, the advance download can be advantageous and disadvantageous when the past receiving data utilization ratio p is higher and lower than 10%, respectively.

The utilization ratio threshold Z may also be calculated according to the following expression (3):

$$Z = C3/C4 \qquad (3)$$

where, when the communication status is a relationship between the type of a currently concluded usage contract of a network between the data receiving terminal 20 and the data distribution server 10 and the type of a preset usage contract of a network, i.e., when DLNetwork is taken as a criterion for determination on the basis of the network-adapted download scheme, C3 is the communication cost occurring when a communication is performed by the communication wave sending/receiving function on the basis of the preset usage contract of the network (e.g., the communication cost of WLAN with a lower communication fee), and C4 is the communication cost occurring when a communication is performed by the communication wave sending/receiving function on the basis of a usage contract other than the preset usage contract of the network (e.g., the communication cost of the mobile telecommunication network with a higher communication fee).

The background from which the above-mentioned expression (3) is derived can be considered similar to that of the above-mentioned expression (1) and thus will not be explained. The background for deriving the expression (3) can easily be understood when C1, C2, and time-shift download scheme in the background for deriving the above-mentioned expression (1) are read as C3, C4, and network-adapted download scheme, respectively.

In the data-utilization-status-adapted download scheme explained in the foregoing, the communication costs C1, C2, C3, C4 and the past receiving data utilization ratio p are required to be calculated beforehand. Therefore, the data receiving terminal 20 may report its own data utilization status (utilization history) to the data distribution server 10. The data utilization history may be reported to the data distribution server 10 by HTTP and the like as in the reception reporting procedure of the MBMS. The data distribution server 10 having received the data utilization history calculates the past receiving data utilization ratio p on the basis of the utilization history. From the communication costs C1, C2, C3, C4 calculated beforehand, the data distribution server 10 further calculates a condition under which the expression (8) holds. According to the condition under which the expression (8) holds, the data distribution server 10 can determine DLDuration and DLNetwork. Without reporting the utilization history to the data distribution server 10, the data receiving terminal 20 itself may calculate the past receiving data utilization ratio p, the condition under which the expression (8) holds, and DLDulation and DLNetwork.

The foregoing may be calculated genre by genre instead of uniformly for the whole distribution data. For example, when a certain user exhibits a higher utilization probability for soccer contents as a taste in hobbies, a different past receiving data utilization ratio p may be calculated for the soccer contents. That is, the utilization ratio threshold Z may be calculated by

$$Z = (C1/C2) \times W, \qquad (2)$$

and the past receiving data utilization ratio p satisfying

$$p \geq C1/C2 \times W \qquad (9)$$

may be computed. In the expressions (2) and (9), W is the weight corresponding to the genre of soccer contents in the distribution data sent from the data distribution server 10.

The foregoing makes it possible to calculate the utilization ratio threshold Z, thus enabling calculation with a higher accuracy.

Partial data download scheme

Another solution to the third problem of selecting data to be subjected to file repair will now be explained. This solution to the third problem will hereinafter be referred to as partial data download scheme. The partial data download scheme is a mechanism in which data to be repaired is aggressively chosen and subjected to the file repair procedure. In the following, a predetermined part to be acquired in distribution data before the user utilizes the distribution data will be referred to as pre-acquisition data.

The communication control unit 210 of the data receiving terminal 20 receives the distribution data including the pre-acquisition data from the data distribution server 10 by using the broadcast wave receiving function. Subsequently, according to a data relevant status related to the distribution data, the determination unit 220 of the data receiving terminal 20 determines whether or not to repair a defect portion (a defect portion in the pre-acquisition data in particular, which will hereinafter be referred to as unreceived portion). Here, the data relevant status is whether or not there is an unreceived portion in the pre-acquisition data. That is, when there is an unreceived portion in the pre-acquisition data, the determination unit 220 of the data receiving terminal 20 determines that the unreceived portion should be repaired before the user of the data receiving terminal 20 utilizes the distribution data.

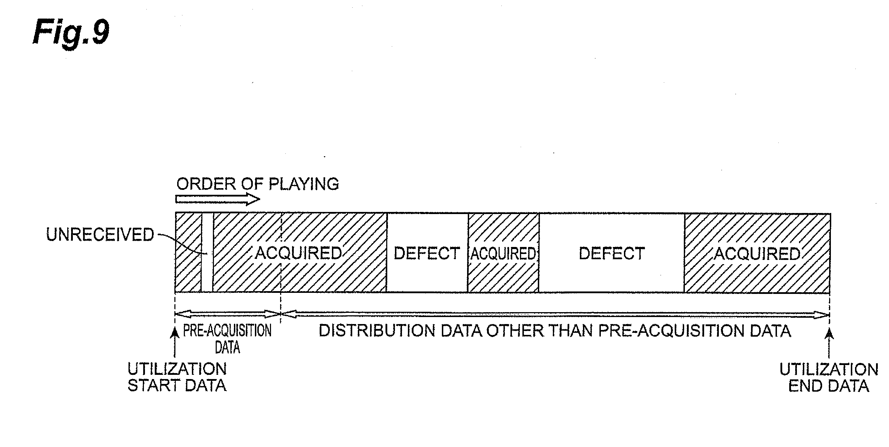

Fig. 9 is a diagram illustrating the contents of distribution data stored in the data storage unit 240 after acquiring the distribution data (e.g., after step 102a of Fig. 5) for explaining the pre-acquisition data, the unreceived portion in the pre-acquisition data, the distribution data other than the pre-acquisition data, and defect portions in the distribution data other than the pre-acquisition data. Fig. 9 hatches the downloaded portion of the whole distribution data and whitens the undownloaded portion (unreceived and defect portions) caused by dropout and the like.

The distribution data in the partial data download scheme is assumed to be one whose portion to be utilized shifts as time passes, such as video and audio data. Therefore, the distribution data is supposed to be utilized sequentially from the left side. Hence, the utilization timing becomes earlier and later toward the left and right sides in Fig. 9. In the following, the portion to be utilized first (e.g., video data utilized immediately after starting playing) after an order from the user to start utilizing data (e.g., order to play) and the portion to be utilized lastly (e.g., video data utilized immediately before completing playing) will be referred to as utilization start data and utilization end data, respectively. If the utilization start data has already been acquired, the distribution data can readily be started to be utilized when there is an order from the user to utilize it, since the utilization start data has already been stored in the data storage unit 240. Therefore, the utilization start data can be regarded as one which will be highly effective if acquired beforehand (before being utilized by the user) in particular. By contrast, the utilization end data will be relatively less effective if acquired beforehand, since the data may be repaired even when started downloading after there is an order from the user to utilize it. Fig. 9 illustrates an example in which the leading portion of the distribution data including the utilization start data is the pre-acquisition data, while the pre-acquisition data includes the unreceived portion therein.

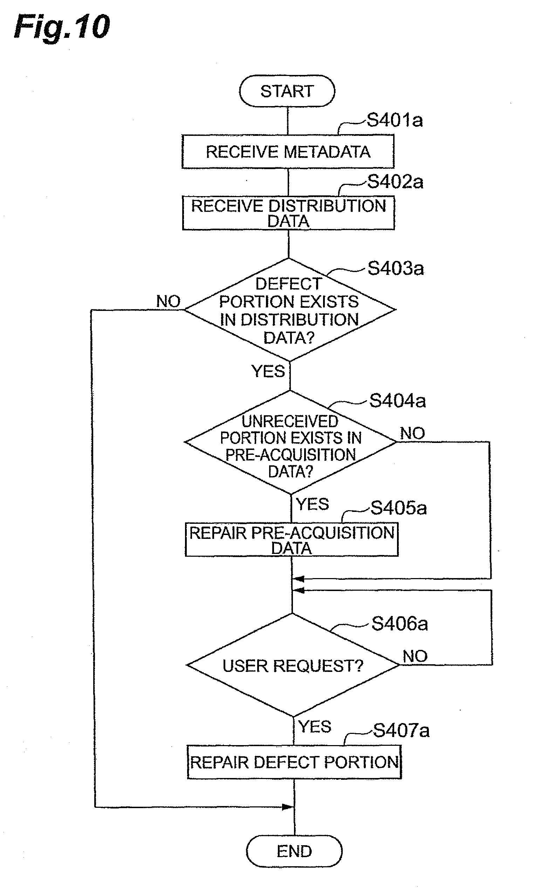

Fig. 10 is a flowchart illustrating a processing flow in a partial data download scheme. Fig. 7 illustrates examples of parameter names and their values recorded in metadata used in this embodiment.

First, by using multimedia broadcasting, the communication control unit 210 of the data receiving terminal 20 acquires metadata (step 401a) and distribution data (step 402a). The processing of steps 401a and 402a is the same as that of steps 101a and 102a illustrated in Fig. 5.

Thereafter, when having determined that there is a defect portion in the distribution data (step 403a: Yes), the determination unit 220 of the data receiving terminal 20 determines whether or not there is an unreceived portion in the pre-acquisition data in the distribution data (step 404a). The size of the unreceived portion at this time is represented by PreDLSize described in the metadata illustrated in Fig. 7. That is, the determination unit 220 determines whether or not there is an unreceived portion in the pre-acquisition data having the size represented by PreDLSize in the distribution data. The data distribution server 10 distributes the metadata including information concerning PreDLSize to the data receiving terminal 20.

Subsequently, when the determination unit 220 determines that there is an unreceived portion in the pre-acquisition data (step 404a: Yes), the file repair procedure is executed for the unreceived portion in the pre-acquisition data (step 405a). When the determination unit 220 determines that there is no unreceived portion in the pre-acquisition data (step 404a: No), the flow skips the file repair procedure to the next step.

Next, when utilization of the data, such as playing thereof, is ordered from the user through the I/O control unit 230 (step 406a: Yes), the data repair for the remaining defect portions in the distribution data is started (step 407a). This step 407a may employ any of the above-mentioned time-shift download, data-utilization-status-adapted download , and data-utilization-status-adapted download schemes or a combination of a plurality of them. When there is no order to utilize from the user (step 406a: No), on the other hand, the order is waited for.

When the determination unit 220 of the data receiving terminal 20 determines that there is no defect portion in the distribution data (step 403a: Yes), no repair processing is performed for the unreceived portion in the pre-acquisition data and the defect portions in the distribution data.

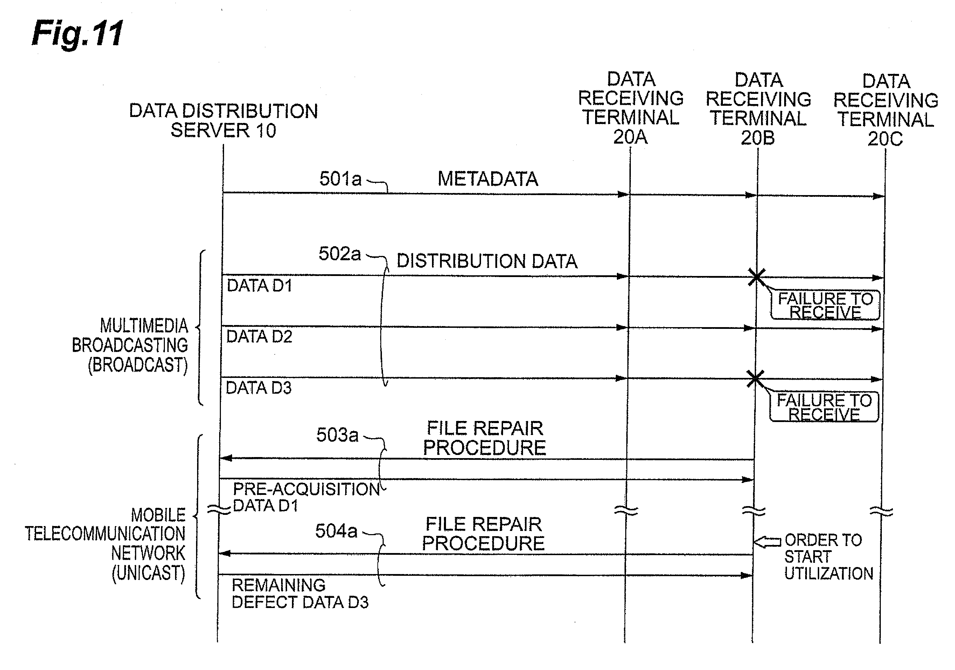

Fig. 11 is a sequence chart for explaining the procedure of the partial data download scheme explained in the foregoing on the basis of the overall structure of the data distribution system 1.

Steps 501a and 502a in Fig. 11 are the same as the steps 10 1a and 102a in Fig. 5. However, in the data D1, D2, D3 serving as distribution data, the data D1 is pre-acquisition data, while the data receiving terminal 20B fails to acquire the data D1 and D3. Thereafter, the data receiving terminal 20B having failed to receive the data compensates for the defect portions by the file repair procedure (steps 503a and 504a). Since the unreceived portion exists in the pre-acquisition data, the data D1, which has not been received, is compensated for by unicast on the mobile telecommunication network at step 503a. Thereafter, when there is an order from the user to start utilizing the distribution data, the remaining defect portion, i.e., data D3, is acquired by the file repair procedure (step 504a).

The foregoing procedure enables the data receiving terminal 20 to distinguish the data to be subjected to the file repair procedure beforehand (pre-acquisition data) and the others from each other and makes it possible to download only the pre-acquisition data beforehand.

Though the foregoing explains a procedure in which PreDLSize is described in metadata while the data distribution server 10 reports it to the data receiving terminal 20, the metadata describing PreDLSize may be stored in the data receiving terminal 20 beforehand. In this case, the determination at step 404a is performed according to PreDLSize described in the metadata stored beforehand in the data storage unit 240 of the data receiving terminal 20.

**PreDLSize determination method: #1**

The size of the pre-acquisition data in the partial data download scheme may be changed according to the status. In the following, a method of determining the size of the pre-acquisition data in the partial data download scheme will be explained.

A reason for setting the pre-acquisition data in the data receiving terminal 20 is to prevent the wait time for downloading the defect portion from occurring at the time when the user starts utilizing the distribution data. Therefore, it will be preferred if the size of the pre-acquisition data is calculated so that the whole defect portion can be compensated for before the distribution data is completely played.

Let x (= PreDLSize) be the size of the pre-acquisition data, D be the total length (total size) of the distribution data, T be the playing time of the distribution data, and V be the average bit rate of the unicast communication network in the communication wave receiving function. Supposing that all the part other than the pre-acquisition data is dropped out, the size of the dropped-out data is (D - x). Therefore, assuming that all the part other than the pre-acquisition data is dropped out, the download time for the dropped-out data can be calculated by (D - x)/V If x can be determined such that the download time is shorter than the data playing time T, all the defect portion can be compensated for before the data is completely played. This can mathematically be expressed as

$$x = D - TV \qquad (4)$$

where $0 \leq x \leq D$.

The above computational expression will now be explained by a specific example. Under a condition where data of 2 Mbytes having a playing time of 80 sec is downloaded in a 100 Kbps network, for example, 1 Mbyte can be determined as the size of the pre-acquisition data (= PreDLSize).

Since the case where all the part other than the pre-acquisition data is dropped out assumes the worst one, determining x such as to satisfy the above-mentioned computational expression can compensate for all the data before the data is completely played.

**PreDLSize determination method: #2**

The above-mentioned data-utilization-status-adapted download scheme determines whether or not to execute the file repair procedure by using as a criterion for determination the relationship between the past receiving data utilization ratio p as a parameter representing the probability of data being actually utilized and the utilization ratio threshold Z calculated on the basis of the communication costs C1, C2, C3, C4 required when utilizing communications. However, whether or not to utilize distribution data may vary among portions of the distribution data, so that the determination of whether or not to execute the file repair procedure seems to be performed more appropriately when this point is taken into consideration. In an example in which the utilization ratio varies among portions of distribution data in Fig. 9, it seems that the utilization start data has a high probability of being referred to by the user in order to see the contents thereof, while the utilization end data has a high probability of being unused because the contents thereof fail to match the user's intention and so forth.

The following method of determining the size of the pre-acquisition data is one focused on the fact that the probability of utilizing the distribution data varies among portions of the data. That is, the size of the pre-acquisition data is calculated according to a past receiving data partial utilization ratio (a probability density function of a data utilization probability which will be explained later) calculated on the basis of the utilization history in each portion of the past receiving data previously received from the data distribution server 10. Specifically, the total size of the portions each having a past receiving data partial utilization ratio at a predetermined threshold or higher is calculated as the size of the pre-acquisition data. In the following, the method of determining the size of the pre-acquisition data according to the past receiving data partial utilization ratio will be explained with reference to specific examples.

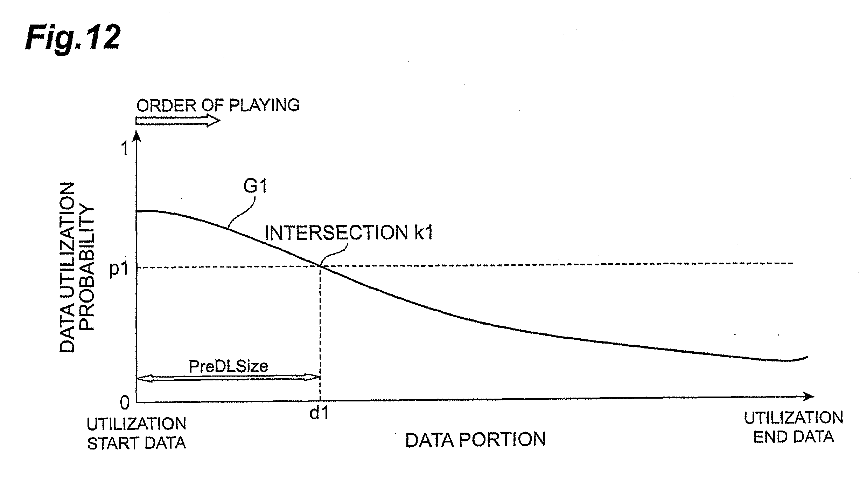

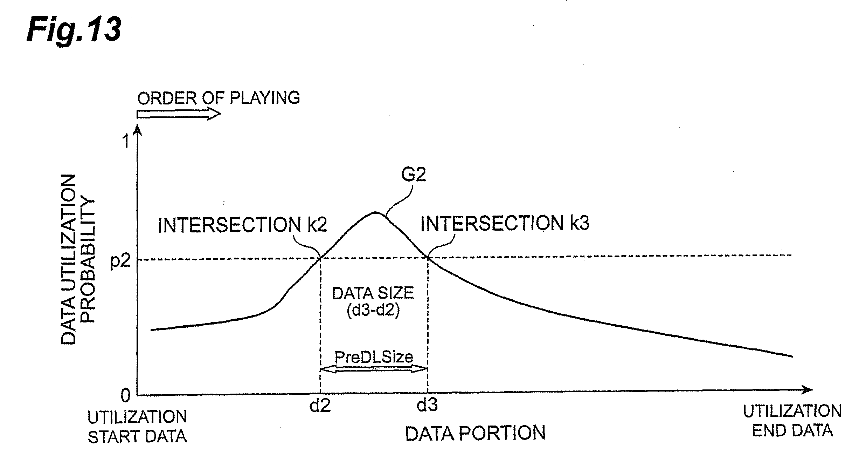

Fig. 12 and 13 illustrate examples in which the utilization probability varies among portions of distribution data. Graphs G1 and G2 are probability density functions of utilization probability of the distribution data. Fig. 12 illustrates that the leading portion of the data (utilization start data) has a higher utilization probability, while the last half of the data (utilization end data) has a lower utilization probability. Though Fig. 12 is just an example, the utilization probability typically shifts as illustrated in Fig. 12 on average. As an exception, in a moving picture of a sports program, for example, there is a case where the preferring probability is locally high in a highlight portion such as a goal scene (the portion corresponding to a data size (d3 - d2)) as illustrated in Fig. 13.

For determining the size of the pre-acquisition data, the data receiving terminal 20 initially determines a probability density function of the data utilization probability concerning the past distribution data. The probability density function of the data utilization probability determined by the data receiving terminal 20 is expressed like G1 and G2 in Figs. 12 and 13. Next, letting p1 be an expected value of the probability density function in Fig. 12, for example, an intersection k1 between the probability density function of the data utilization probability and the expected value p1 is determined by a horizontal broken line illustrated in Fig. 12. Once the intersection k1 is determined, a data size d1 corresponding to k1 is obtained. Finally taking the data size d1 as the size of the pre-acquisition data PreDLSize can determine the size of the pre-acquisition data PreDLSize according to the utilization probability of distribution data. The expected value p1 of the probability density function may appropriately be set in view of the communication status, the kind of data, the current state of utilization, and the like.

Letting p2 be an expected value of the probability density function in Fig. 13, for example, intersections k2, k3 between the probability density function of the data utilization probability and the expected value p2 are determined by a horizontal broken line illustrated in Fig. 13. Once the intersections k2, k3 are determined, respective data sizes d2, d3 corresponding to the intersections k2, k3 are obtained. Finally taking the data size (d3 - d2) as the size of the pre-acquisition data PreDLSize can determine the size of the pre-acquisition data PreDLSize according to the utilization probability of distribution data. The expected value p2 of the probability density function may appropriately be set in view of the communication status, the kind of data, the current state of utilization, and the like.

The foregoing method makes it possible to download portions having higher data utilization probabilities as pre-acquisition data beforehand.

**Combination of the schemes**

The schemes explained in the foregoing, i.e., the time-shift download scheme, network-adapted download scheme, data-utilization-status-adapted download scheme, partial data download scheme, and first and second methods of determining PreDLSizes, can be used in combinations.

As an example of modes for combining the schemes, the above-mentioned Fig. 10 illustrates a processing flow in the partial data download scheme in which, when the determination unit 220 determines that there is an unreceived portion in the pre-acquisition data at step 404a, the file repair procedure is executed for the unreceived portion of the pre-acquisition data at step 405a. Between the steps 404a and 405a, the flow may further comprise processing such as step 204a in the time-shift download scheme illustrated in Fig. 6 or step 304a in the network-adapted download scheme illustrated in Fig. 8. Not only the combination thus explained as an example but also various combinations are possible, while (And/Or) conditions for the combinations may be included in the metadata.

**Determination on the data distribution server 10 side**

The foregoing explains a case where the determination unit 220 of the data receiving terminal 20 is one which determines whether or not to repair the defect portion of distribution data and the unreceived portion of the pre-acquisition data. However, the determination may be performed on the data distribution server 10 side without being restricted to the foregoing. In this case, without performing the determination, the data receiving terminal 20 requests for resending the defect portion of the distribution data or the unreceived portion of the pre-acquisition data. Subsequently, when the resending request receiving unit 130 of the data distribution server 10 receives the request for resending from the data receiving terminal 20 by using the communication wave sending/receiving function, the resending determination unit 140 of the data distribution server 10 determines whether or not to resend the defect portion of the distribution data in response to the request for resending according to at least one of the communication status and data relevant status. The communication status and data relevant status at this time are as explained above.

That is, the communication status at this time is the relationship between the current time and a preset time period, the relationship between the type of a currently available network between the data receiving terminal 20 and the data distribution server 10 and the type of a preset network, the relationship between the kind of a base station currently available in the currently available network and the kind of a preset base station preset in relation to the currently available network, the relationship between the remaining battery level of the data receiving terminal 20 and a preset threshold of the remaining battery level, the relationship between the type of a currently concluded usage contract of a network between the data receiving terminal 20 and the data distribution server 10 and the type of a preset usage contract of a network, the relationship between the radio field strength between the data receiving terminal 20 and the data distribution server 10 and a preset threshold of the radio field strength, or the like.

The data relevant status at this time may represent the utilization status of distribution data and may be the relationship between the past receiving data utilization ratio p calculated on the basis of a usage history of past receiving data and the threshold Z of utilization ratio calculated on the basis of the communication status. In this case, the resending determination unit 140 of the data distribution server 10 compares the past receiving data utilization ratio p with the threshold Z of utilization ratio and determines on the basis of the time-shift download scheme or network-adapted download scheme that the defect portion should be repaired before the user of the data receiving terminal 20 utilizes the distribution data when the past receiving data utilization ratio is at the threshold Z or higher. The threshold Z of utilization ratio in this case can be calculated according to the above-mentioned expression (1) or (3).

**Advantageous effects of this embodiment**

Advantageous effects of the data distribution system 1 in accordance with this embodiment will now be explained. In the data distribution system 1 in accordance with this embodiment, when having determined that there is a defect portion in distribution data, the data receiving terminal 20 determines whether or not to repair the defect portion according to at least one of a communication status between the data receiving terminal 20 and the data distribution server 10 and a data relevant status related to the distribution data. Since whether or not to execute the defect portion repair processing is appropriately determined according to the communication status and data relevant status, unnecessary communication costs can be prevented from occurring when repairing the defect portion in the broadcast-wave data communications with communication waves.

In this embodiment, in response to a request from the data receiving terminal 20 to resend a defect portion of distribution data, the data distribution server 10 determines whether or not to repair the defect portion according to at least one of a communication status between the data receiving terminal 20 and the data distribution server 10 and a data relevant status related to the distribution data. Since whether or not to execute the defect portion repair processing is appropriately determined according to the communication status and data relevant status, unnecessary communication costs can be prevented from occurring when repairing the defect portion in the broadcast-wave data communications with communication waves.

**Industrial Applicability**

The present invention provides a data receiving terminal, a data distribution server, a data distribution system, and a data distribution method which can prevent unnecessary communication costs from occurring when repairing defect portions in broadcast-wave data communications with communication waves.

**Claims**

**1.** A data receiving terminal having a broadcast wave receiving function and a communication wave sending/receiving function, the data receiving terminal comprising:

broadcast wave receiving means for receiving data from a data distribution server by using the broadcast wave receiving function; repair determination means for determining whether or not there is a defect portion in the data and, when it is determined that there is the defect portion, determining whether or not to repair the defect portion according to at least one of a communication status between the data receiving terminal and the data distribution server and a data relevant status related to the data; communication wave sending/receiving means for requesting, when the repair determination means determines that the defect portion should be repaired, the data distribution server to resend the defect portion by using the communication wave sending/receiving function and receiving the defect portion sent from the data distribution server according to the request for resending by using the communication wave sending/receiving function; and
storage means for storing the defect portion received by the communication wave sending/receiving means.

2. The data receiving terminal according to claim 1, wherein the communication status is a relationship between a current time and a preset time period; and wherein the repair determination means compares the current time with the time period and determines that the defect portion should be repaired when the current time falls within the time period.

3. The data receiving terminal according to claim 1, wherein the communication status is a relationship between a type of a network currently available between the data receiving terminal and the data distribution server and a type of a preset network; and wherein the repair determination means compares the type of the currently available network with the type of the preset network and determines that the defect portion should be repaired when the same type exists.

4. The data receiving terminal according to claim 3, wherein the communication status is a relationship between a kind of a currently available base station in the currently available network and a kind of a base station preset in relation to the currently available network; and wherein the repair determination means compares the kind of the currently available base station with the kind of the preset base station and determines that the defect portion should be repaired when the same kind exists.

5. The data receiving terminal according to claim 1, wherein the communication status is a relationship between a remaining battery level of the data receiving terminal and a preset threshold of the remaining battery level; and wherein the repair determination means compares the remaining battery level of the data receiving terminal with the threshold and determines that the defect portion should be repaired when the remaining battery level of the data receiving terminal is at the threshold or higher.

6. The data receiving terminal according to claim 1, wherein the communication status is a relationship between a type of a currently concluded usage contract of a network between the data receiving terminal and the data distribution server and a type of a preset usage contract of a network; and wherein the repair determination means compares the type of the currently concluded usage contract of the network with the type of the preset usage contract of the network and determines that the defect portion should be repaired when the same type exists.

7. The data receiving terminal according to claim 1, wherein the communication status is a relationship between a radio field strength between the data receiving terminal and the data distribution server and a preset threshold of the radio field strength; and wherein the repair determination means compares the radio field strength between the data receiving terminal and the data distribution server with the threshold and determines that the defect portion should be repaired when the radio field strength between the data receiving terminal and the data distribution server is at the threshold or higher.

8. The data receiving terminal according to claim 1, wherein the data relevant status is a relationship between a past receiving data utilization ratio calculated on the basis of a usage history of past receiving data previously received from the data distribution server and a threshold Z of utilization ratio calculated on the basis of the communication status; and wherein the repair determination means compares the past receiving data utilization ratio with the threshold Z of utilization ratio and determines that the defect portion should be repaired before a user of the data receiving terminal utilizes the data when the past receiving data utilization ratio is at the threshold Z or higher.

9. The data receiving terminal according to claim 8, wherein the communication status is a relationship between the current time and a preset time period; and wherein the threshold Z of utilization ratio is calculated by

$$Z = C1/C2 \qquad (1)$$

where C1 is a communication cost occurring when a communication is performed by the communication wave sending/receiving function within the preset time period, and C2 is a communication cost occurring when a communication is performed by the communication wave sending/receiving function on the outside of the preset time period.

10. The data receiving terminal according to claim 9, wherein the threshold Z of utilization ratio is calculated by

$$Z = (C1/C2) \times W \qquad (2)$$

where W is a weight corresponding to a genre of data sent from the data distribution server.

11. The data receiving terminal according to claim 8, wherein the communication status is a relationship between a type of a currently concluded usage contract of a network between the data receiving terminal and the data distribution server and a type of a preset usage contract of a network;
wherein the threshold Z of utilization ratio is calculated by

$$Z = C3/C4 \qquad (3)$$

where C3 is a communication cost occurring when a communication is performed by the communication wave sending/receiving function on the basis of the preset usage contract of the network, and C4 is a communication cost occurring when a communication is performed by the communication wave sending/receiving function on the basis of a usage contract other than the preset usage contract of the network.

12. The data receiving terminal according to claim 1, wherein the broadcast wave receiving means receives pre-acquisition data, as a predetermined part of data to be received from the data distribution server, from the data distribution server by using the broadcast wave receiving function;
wherein the data relevant status is whether or not there is an unreceived portion in the pre-acquisition data; and
wherein the repair determination means determines that the unreceived portion should be repaired before a user of the data receiving terminal utilizes the data when it is determined that there is the pre-acquisition data in the unreceived portion.

13. The data receiving terminal according to claim 12, wherein the pre-acquisition data is a leading portion of the data to be received from the data distribution server.

14. The data receiving terminal according to claim 12, wherein the size of the pre-acquisition data is calculated by

$$x = D - TV \qquad (4)$$

where x is a size of the pre-acquisition data, D is a total size of data to be received from the data distribution server, T is a playing time of the data, and V is a average bit rate of the network in the communication wave sending/receiving function.

15. The data receiving terminal according to claim 12, wherein a size of the pre-acquisition data is calculated according to a past receiving data partial utilization ratio computed on the basis of a utilization history in each portion of past receiving data previously received from the data distribution server; and
wherein a total size of portions each having the past receiving data partial utilization ratio at a predetermined threshold or higher is computed as the size of the pre-acquisition data.

16. The data receiving terminal according to claim 1, wherein the broadcast wave receiving means receives metadata describing at least one of the communication status and the data relevant status from the data distribution server by using the broadcast wave receiving function.

17. The data receiving terminal according to claim 1, wherein the storage means stores metadata describing at least one of the communication status and the data relevant status.

18. A data distribution server having a broadcast wave sending function and a communication wave sending/receiving function, the data distribution server comprising:

data transmission means for sending data to a data receiving terminal by using the broadcast wave sending function;
resending request receiving means to be requested from the data receiving terminal to resend a defect portion of the data by using the communication wave sending/receiving function; and
defect portion transmission means for sending the defect portion to the data receiving terminal according to the request for resending by using the communication wave sending/receiving function.

19. The data distribution server according to claim 18, further comprising resending determination means for determining whether or not to resend the defect portion according to at least one of a communication status between the data receiving terminal and the data distribution server and a data relevant status related to the data in response to the request for resending;
wherein the defect portion transmission means sends the defect portion to the data receiving terminal by using the communication wave sending/receiving function when the resending determination means determines that the defect portion should be resent.

20. The data distribution server according to claim 19, wherein the data relevant status is a relationship between a past receiving data utilization ratio calculated on the basis of a usage history of past receiving data previously received by the data receiving terminal from the data distribution server and a threshold Z of utilization ratio calculated on the basis of the communication status; and
wherein the resending determination means compares the past receiving data utilization ratio with the threshold Z of utilization ratio and determines that the defect portion should be resent to the data receiving terminal before a user of the data receiving terminal utilizes the data when the past receiving data utilization ratio is at the threshold Z or higher.

21. The data distribution server according to claim 20, wherein the communication status is a relationship between the current time and a preset time period; and
wherein the threshold Z of utilization ratio is calculated by

$$Z = C1/C2 \qquad (1)$$

where C 1 is a communication cost occurring when a communication is performed by the communication wave sending/receiving function within the preset time period, and C2 is a communication cost occurring when a communication is performed by the communication wave sending/receiving function on the outside of the preset time period.

22. The data distribution server according to claim 20, wherein the communication status is a relationship between a type of a currently concluded usage contract of a network between the data receiving terminal and the data distribution server and a type of a preset usage contract of a network; and wherein the threshold Z of utilization ratio is calculated by

$$Z = C3/C4 \qquad (3)$$

where C3 is a communication cost occurring when a communication is performed by the communication wave sending/receiving function on the basis of the preset usage contract of the network, and C4 is a communication cost occurring when a communication is performed by the communication wave sending/receiving function on the basis of a usage contract other than the preset usage contract of the network.

23. The data distribution server according to claim 18, wherein the data transmission means sends metadata describing at least one of the communication status and the data relevant status to the data receiving terminal by using the broadcast wave sending function.

24. A data distribution system including a data receiving terminal having a broadcast wave receiving function and a communication wave sending/receiving function and a data distribution server having a broadcast wave sending function and a communication wave sending/receiving function;
the data receiving terminal comprising:

broadcast wave receiving means for receiving data from the data distribution server by using the broadcast wave receiving function;
repair determination means for determining whether or not there is a defect portion in the data and, when it is determined that there is the defect portion, determining whether or not to repair the defect portion according to at least one of a communication status between the data receiving terminal and the data distribution server and a data relevant status related to the data;
communication wave sending/receiving means for requesting, when the repair determination means determines that the defect portion should be repaired, the data distribution server to resend the defect portion by using the communication wave sending/receiving function and receiving the defect portion sent from the data distribution server according to the request for resending by using the communication wave sending/receiving function; and
storage means for storing the defect portion received by the communication wave sending/receiving means;
the data distribution server comprising:

data transmission means for sending data to the data receiving terminal by using the broadcast wave sending function;
resending request receiving means to be requested from the data receiving terminal to resend the defect portion of the data by using the communication wave sending/receiving function; and
defect portion transmission means for sending the defect portion to the data receiving terminal according to the request for resending by using the communication wave sending/receiving function.

25. A data distribution method in a data distribution system including a data receiving terminal having a broadcast wave receiving function and a communication wave sending/receiving function and a data distribution server having a broadcast wave sending function and a communication wave sending/receiving function;
the method comprising:

a data sending step for data transmission means in the data distribution server to send data to the data receiving terminal by using the broadcast wave sending function;
a broadcast wave receiving step for broadcast wave receiving means in the data receiving terminal to receive the data from the data distribution server by using the broadcast wave receiving function;
a repair determination step for repair determination means in the data receiving terminal to determine whether or not there is a defect portion in the data and, when it is determined that there is the defect portion, determine whether or not to repair the defect portion according to at least one of a communication status between the data receiving terminal and the data distribution server and a data relevant status related to the data;
a first communication wave sending/receiving step for communication wave sending/receiving means in the data receiving terminal to request, when the repair determination means determines that the defect portion should be repaired, the data distribution server to resend the defect portion by using the communication wave sending/receiving function;
a resending request receiving step for resending request receiving means in the data distribution server to be requested from the data receiving terminal to resend the defect portion of the data by using the communication wave sending/receiving function;
a defect portion sending step for defect portion transmission means in the data distribution server to send the defect portion to the data receiving terminal according to the request for resending by using the communication wave sending/receiving function;
a second communication wave sending/receiving step for the communication wave sending/receiving means in the data receiving terminal to receive the defect portion sent from the data distribution server according to the request for resending by using the communication wave sending/receiving function; and
a storage step for storage means in the data receiving terminal to store the defect portion received by the communication wave sending/receiving means.

26. The data distribution method according to claim 25, wherein the communication status is a relationship between a current time and a preset time period; and

wherein the repair determination means compares the current time with the time period and determines that the defect portion should be repaired when the current time falls within the time period.

27. The data distribution method according to claim 25, wherein the communication status is a relationship between a type of a network currently available between the data receiving terminal and the data distribution server and a type of a preset network; and
wherein the repair determination means compares the type of the currently available network with the type of the preset network and determines that the defect portion should be repaired when the same type exists.

28. The data distribution method according to claim 27, wherein the communication status is a relationship between a kind of a currently available base station in the currently available network and a kind of a base station preset in relation to the currently available network; and
wherein the repair determination means compares the kind of the currently available base station with the kind of the preset base station and determines that the defect portion should be repaired when the same kind exists.

29. The data distribution method according to claim 25, wherein the communication status is a relationship between a remaining battery level of the data receiving terminal and a preset threshold of the remaining battery level; and
wherein the repair determination means compares the remaining battery level of the data receiving terminal with the threshold and determines that the defect portion should be repaired when the remaining battery level of the data receiving terminal is at the threshold or higher.

30. The data distribution method according to claim 25, wherein the communication status is a relationship between a type of a currently concluded usage contract of a network between the data receiving terminal and the data distribution server and a type of a preset usage contract of a network; and
wherein the repair determination means compares the type of the currently concluded usage contract of the network with the type of the preset usage contract of the network and determines that the defect portion should be repaired when the same type exists.

31. The data distribution method according to claim 25, wherein the communication status is a relationship between a radio field strength between the data receiving terminal and the data distribution server and a preset threshold of the radio field strength; and

wherein the repair determination means compares the radio field strength between the data receiving terminal and the data distribution server with the threshold and determines that the defect portion should be repaired when the radio field strength between the data receiving terminal and the data distribution server is at the threshold or higher.

32. The data distribution method according to claim 25, wherein the data relevant status is a relationship between a past receiving data utilization ratio calculated on the basis of a usage history of past receiving data previously received from the data distribution server and a threshold Z of utilization ratio calculated on the basis of the communication status; and wherein the repair determination means compares the past receiving data utilization ratio with the threshold Z of utilization ratio and determines that the defect portion should be repaired before a user of the data receiving terminal utilizes the data when the past receiving data utilization ratio is at the threshold Z or higher.

33. The data distribution method according to claim 32, wherein the communication status is a relationship between a current time and a preset time period; and wherein the threshold Z of utilization ratio is calculated by

$$Z = C1/C2 \quad (1)$$

where C 1 is a communication cost occurring when a communication is performed by the communication wave sending/receiving function within the preset time period, and C2 is a communication cost occurring when a communication is performed by the communication wave sending/receiving function on the outside of the preset time period.

34. The data distribution method according to claim 33, wherein the threshold Z of utilization ratio is calculated by

$$Z = (C1/C2) \times W \quad (2)$$

where W is a weight corresponding to a genre of data sent from the data distribution server.

35. The data distribution method according to claim 32, wherein the communication status is a relationship between a type of a currently concluded usage contract of a network between the data receiving terminal and the data distribution server and a type of a preset usage contract of a network; and

wherein the threshold Z of utilization ratio is calculated by

$$Z = C3/C4 \quad (3)$$

where C3 is a communication cost occurring when a communication is performed by the communication wave sending/receiving function on the basis of the preset usage contract of the network, and C4 is a communication cost occurring when a communication is performed by the communication wave sending/receiving function on the basis of a usage contract other than the preset usage contract of the network.

36. The data distribution method according to claim 25, wherein the broadcast wave receiving means receives pre-acquisition data, as a predetermined part of data to be received from the data distribution server, from the data distribution server by using the broadcast wave receiving function; wherein the data relevant status is whether or not there is an unreceived portion in the pre-acquisition data; and wherein the repair determination means determines that the unreceived portion should be repaired before a user of the data receiving terminal utilizes the data when it is determined that there is the unreceived portion in the pre-acquisition data.

37. The data distribution method according to claim 36, wherein the pre-acquisition data is a leading portion of the data to be received from the data distribution server.

38. The data distribution method according to claim 36, wherein the size of the pre-acquisition data is calculated by

$$x = D - TV \quad (4)$$

where x is a size of the pre-acquisition data, D is a total size of data to be received from the data distribution server, T is a playing time of the data, and V is a average bit rate of the network in the communication wave sending/receiving function.

39. The data distribution method according to claim 36, wherein a size of the pre-acquisition data is calculated according to a past receiving data partial utilization ratio computed on the basis of a utilization history in each portion of past receiving data previously received from the data distribution server; and wherein a total size of portions each having the past receiving data partial utilization ratio at a predetermined threshold or higher is computed as the size of the pre-acquisition data.

**40.** The data distribution method according to claim 25, wherein the broadcast wave receiving means receives metadata describing at least one of the communication status and the data relevant status from the data distribution server by using the broadcast wave receiving function.

**41.** The data distribution method according to claim 25, wherein the storage means stores metadata describing at least one of the communication status and the data relevant status.

*Fig.1*

# Fig.2

10(20)

(21)11 — CPU ↔ COMMUNICATION MODULE ⌐16(26)

(22)12 — ROM

⌐17(27)
AUXILIARY STORAGE UNIT

(23)13 — RAM

(24)14 — INPUT DEVICE

(25)15 — OUTPUT DEVICE

*Fig.3*

DATA DISTRIBUTION SERVER

10

120
DATA
TRANSMISSION
UNIT

TO DATA RECEIVING TERMINAL 20

110

STORAGE UNIT

130
RESENDING
REQUEST
RECEIVING UNIT

FROM DATA RECEIVING TERMINAL 20

140
RESENDING
DETERMINATION
UNIT

150
DEFECT PORTION
TRANSMISSION
UNIT

TO DATA RECEIVING TERMINAL 20

# Fig.4

DATA RECEIVING TERMINAL — 20

WITH DATA DISTRIBUTION SERVER 10

COMMUNICATION CONTROL UNIT — 210

DETERMINATION UNIT — 220

I/O CONTROL UNIT — 230

DATA STORAGE UNIT — 240

*Fig.5*

DATA DISTRIBUTION SERVER 10

DATA RECEIVING TERMINAL 20A(20)

DATA RECEIVING TERMINAL 20B(20)

DATA RECEIVING TERMINAL 20C(20)

101a — METADATA

102a — DISTRIBUTION DATA

103a — FILE REPAIR PROCEDURE

DATA D1
DATA D2
DATA D3

DATA D3

FAILURE TO RECEIVE

MULTIMEDIA BROADCASTING (BROADCAST)

MOBILE TELECOMMUNICATION NETWORK (UNICAST)

# Fig.6

```
                    ┌──────────┐
                    │  START   │
                    └──────────┘
                          │            ⌐S201a
              ┌───────────────────────┐
              │   RECEIVE METADATA     │
              └───────────────────────┘
                          │            ⌐S202a
              ┌───────────────────────┐
              │ RECEIVE DISTRIBUTION   │
              │        DATA            │
              └───────────────────────┘
                          │            ⌐S203a
       NO            ◇ DEFECT ◇
    ◄─────────────  PORTION EXISTS
    │                     ?
    │                    YES
    │                     │◄──────────────────────────┐
    │                                                  │
    │              ◇ FILE ◇  ⌐S204a                    │
    │            REPAIR OK?                            │
    │         (DETERMINED BY      NO                   │
    │            DLDulation) ─────────────┐           │
    │                    YES              │           │
    │                    │  ⌐S205a    ◇ S206a         │
    │              ┌──────────┐    WAIT TILL OK?  YES │
    │              │  REPAIR  │  ────────────────────►┘
    │              └──────────┘         │
    │                    │             NO
    └──────────────►◄────┘◄─────────────┘
                    ┌──────────┐
                    │   END    │
                    └──────────┘
```

# Fig.7

| Parameter | Value |
|---|---|
| DLDulation | 2:00am-6:00am |
| TimeWait OK | OK |
| DLNetwork | WLAN, WiMAX, NGN, FemtoBTS |
| NwWaitOK | OK |
| PreDLSize | 100Kbyte |

## Fig.8

```
                    START

                              S301a
              RECEIVE METADATA

                              S302a
            RECEIVE DISTRIBUTION
                    DATA

                              S303a
                    DEFECT
      NO         PORTION EXISTS
                       ?

                    YES

                              S304a
                    FILE
                 REPAIR OK?              NO
               (DETERMINED BY
                 DLNetwork)
                                                     S306a

                    YES    S305a
                                            WAIT TILL OK?      YES
                  REPAIR

                                                  NO

                    END
```

*Fig.9*

ORDER OF PLAYING

UNRECEIVED

ACQUIRED DEFECT ACQUIRED DEFECT ACQUIRED

PRE-ACQUISITION
DATA

DISTRIBUTION DATA OTHER THAN PRE-ACQUISITION DATA

UTILIZATION
START DATA

UTILIZATION
END DATA

# Fig.10

```
                    START
                      |
                      |          S401a
        ┌─────────────────────────────┐
        │      RECEIVE METADATA        │
        └─────────────────────────────┘
                      |          S402a
        ┌─────────────────────────────┐
        │  RECEIVE DISTRIBUTION        │
        │           DATA               │
        └─────────────────────────────┘
                      |
                      |          S403a
              ╱───────────────╲
       NO    ╱     DEFECT       ╲
    ◄────────  PORTION EXISTS
             ╲  IN DISTRIBUTION ╱
              ╲    DATA?        ╱
               ╲──────────────╱
                    YES
                      |          S404a
              ╱───────────────╲
             ╱   UNRECEIVED     ╲   NO
             │ PORTION EXISTS IN │──────►
             ╲  PRE-ACQUISITION ╱
              ╲    DATA?        ╱
               ╲──────────────╱
                    YES        S405a
        ┌─────────────────────────────┐
        │  REPAIR PRE-ACQUISITION      │
        │           DATA               │
        └─────────────────────────────┘
                      |
                      |          S406a
              ╱───────────────╲
             ╱                  ╲   NO
             │  USER REQUEST?    │──────►
             ╲                  ╱
               ╲──────────────╱
                    YES        S407a
        ┌─────────────────────────────┐
        │    REPAIR DEFECT PORTION     │
        └─────────────────────────────┘
                      |
                      |
                     END
```

36

## Fig.11

# Fig.12

# Fig.13

ORDER OF PLAYING

DATA UTILIZATION PROBABILITY

G2

INTERSECTION k2   INTERSECTION k3

p2

DATA SIZE
(d3-d2)

PreDLSize

d2   d3

UTILIZATION
START DATA

DATA PORTION

UTILIZATION
END DATA

EP 2 341 709 A1

## INTERNATIONAL SEARCH REPORT

| | International application No. |
|---|---|
| | PCT/JP2009/066023 |

A. CLASSIFICATION OF SUBJECT MATTER
*H04N7/173*(2006.01)i, *G06F13/00*(2006.01)i, *H04H20/24*(2008.01)i, *H04L1/16*(2006.01)i, *H04W4/08*(2009.01)i

According to International Patent Classification (IPC) or to both national classification and IPC

B. FIELDS SEARCHED

Minimum documentation searched (classification system followed by classification symbols)
H04N7/173, G06F13/00, H04H20/24, H04L1/16, H04W4/08

Documentation searched other than minimum documentation to the extent that such documents are included in the fields searched
Jitsuyo Shinan Koho          1922-1996    Jitsuyo Shinan Toroku Koho    1996-2009
Kokai Jitsuyo Shinan Koho     1971-2009    Toroku Jitsuyo Shinan Koho    1994-2009

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2007-259050 A  (Casio Hitachi Mobile Communications Co., Ltd.), 04 October 2007 (04.10.2007), | 1,6,7,12,13, 18,24,25,30, 31,36,37 |
| Y | paragraphs [0016] to [0027], [0040] to [0045], [0053] to [0054], [0058] to [0070]; fig. 1, 2, 7 & US 2007/0223535 A1 | 2,5,16,17, 23,26,29,40, 41 |
| A | | 3,4,8-11,14, 15,19-22,27, 28,32-35,38, 39 |

☒ Further documents are listed in the continuation of Box C.    ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 07 December, 2009 (07.12.09) | 15 December, 2009 (15.12.09) |

| Name and mailing address of the ISA/ Japanese Patent Office | Authorized officer |
|---|---|
| | |
| Facsimile No. | Telephone No. |

Form PCT/ISA/210 (second sheet) (April 2007)

**INTERNATIONAL SEARCH REPORT**

| International application No. |
| --- |
| PCT/JP2009/066023 |

C (Continuation).   DOCUMENTS CONSIDERED TO BE RELEVANT

| Category* | Citation of document, with indication, where appropriate, of the relevant passages | Relevant to claim No. |
| --- | --- | --- |
| X | JP 2002-232478 A  (Matsushita Electric Industrial Co., Ltd.), 16 August 2002 (16.08.2002), paragraphs [0066] to [0097], [0105] to [0123]; fig. 1 | 1,3,6,7,12, 13,18,19,24, 25,27,30,31, 36,37 |
| Y | & US 2002/0095636 A1     & EP 1235383 A1 & WO 2002/037763 A1     & CN 1394411 A | 2,5,16,17, 23,26,29,40, 41 |
| A |  | 4,8-11,14, 15,20-22,28, 32-35,38,39 |
| Y | JP 2007-219650 A  (KDDI Corp.), 30 August 2007 (30.08.2007), paragraphs [0024] to [0033]; fig. 1 (Family: none) | 2,26 |
| Y | JP 2005-328267 A  (Kabushiki Kaisha Nekusuto Webu), 24 November 2005 (24.11.2005), paragraphs [0012] to [0014], [0020]; fig. 1 (Family: none) | 5,29 |
| Y | JP 2008-205969 A  (Sony Corp.), 04 September 2008 (04.09.2008), paragraphs [0157] to [0165]; fig. 14 to 15 & US 2008/0198705 A1 | 16,17,23,40, 41 |
| A | JP 2005-110013 A  (Toshiba Corp.), 21 April 2005 (21.04.2005), paragraphs [0010] to [0013], [0017] to [0055]; fig. 1 to 5 (Family: none) | 7,31 |
| A | JP 2002-77856 A  (Hitachi, Ltd.), 15 March 2002 (15.03.2002), entire text; all drawings & US 2002/0025777 A1     & EP 1193898 A2 & KR 10-2002-0017903 A | 1-41 |
| A | JP 2005-33424 A  (Mitsubishi Electric Corp.), 03 February 2005 (03.02.2005), paragraphs [0007] to [0016]; fig. 1 (Family: none) | 1-41 |

Form PCT/ISA/210 (continuation of second sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **Murali R. Chari ; Fuyun Ling ; Ashok Mantravadi ; Raghuraman Krishnamoorthi ; Rajiv Vijayan ; G. Kent Walker ; Rob Chandhok.** FLO Physical Layer: An Overview. *IEEE TRANSACTIONS ON BROAD-CASTING,* March 2007, vol. 53 (1